(19) Europäisches Patentamt / European Patent Office / Office européen des brevets

(11) **EP 4 742 115 A1**

(12) **EUROPEAN PATENT APPLICATION**
published in accordance with Art. 153(4) EPC

(43) Date of publication:
**13.05.2026   Bulletin 2026/20**

(21) Application number: **23944282.5**

(22) Date of filing: **03.07.2023**

(51) International Patent Classification (IPC):
*G06N 10/70* (2022.01)

(52) Cooperative Patent Classification (CPC):
**G06N 10/20; G06N 5/01; G06N 10/00; G06N 10/60; G06N 10/70**

(86) International application number:
**PCT/JP2023/024672**

(87) International publication number:
**WO 2025/009030 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventor: **YAMAGUCHI, Masaomi**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **QUANTUM CALCULATION SUPPORT PROGRAM, QUANTUM CALCULATION SUPPORT METHOD, AND INFORMATION PROCESSING DEVICE**

(57)   To improve the fidelity of quantum computation in accordance with a dynamic quantum circuit.

An information processing apparatus (10) generates, based on a first dynamic quantum circuit (1), a plurality of candidate assignments (3a, 3b, and so on). The information processing apparatus (10) generates, based on the plurality of candidate assignments (3a, 3b, and so on), second dynamic quantum circuits (4a, 4b, and so on) that satisfy a constraint condition (2). The information processing apparatus (10) acquires measurement results at a measurement point (1a) in a plurality of quantum computations executed in accordance with second dynamic quantum circuits corresponding to a part of the plurality of candidate assignments (3a, 3b, and so on). The information processing apparatus (10) calculates, based on the measurement results, an index value affecting fidelity for each of the plurality of candidate assignments (3a, 3b, and so on), the index value representing fidelity when quantum computation is executed in accordance with the corresponding second dynamic quantum circuit (4a, 4b, and so on). The information processing apparatus (10) determines an assignment based on the index value.

FIG. 1

## Description

Technical Field

The embodiments discussed herein relate to a quantum computation support program, a quantum computation support method, and an information processing apparatus.

Background Art

A computation performed by a quantum computer is represented as a quantum circuit. A quantum circuit indicates gate operations to be applied to qubits. Each qubit indicated in a quantum circuit is assigned to a qubit in a quantum device (hereinafter referred to as a physical qubit).

The quantum computer executes, for a circuit qubit indicated in the quantum circuit, a gate operation on the physical qubit corresponding to that circuit qubit. As a result, the state of the physical qubit changes. When the quantum circuit includes an instruction to measure the state of the circuit qubit, the quantum computer measures the state of the physical qubit corresponding to the circuit qubit and stores the result in a classical bit.

A quantum circuit corresponding to a problem to be solved is described using various types of quantum gates. However, quantum gates executable by the quantum computer (native gates) are limited to a subset of quantum gates. Therefore, an initial quantum circuit is converted into a quantum circuit composed solely of native gates.

In addition, in a quantum computer, a pair of qubits on which a two-qubit gate operation is executable is limited to a pair of qubits adjacent to each other in topology. Accordingly, in the conversion of a quantum circuit, when a two-qubit gate is present, a pair of circuit qubits in the quantum circuit on which the two-qubit gate is to operate is assigned to a pair of physical qubits adjacent to each other in topology. If such an assignment is not possible, a swap gate is added to the converted quantum circuit. By adding a swap gate, each physical qubit corresponding to each circuit qubit on which the gate operation is to be performed is changed to one that is adjacent in topology.

The number of swap gates to be added depends on the assignment relationship between the physical qubits and the circuit qubits in the initial state. The number of swap gates affects the fidelity of quantum computation using the quantum circuit. Fidelity is a performance index indicating how closely the operation of qubits approximates an ideal operation. As the number of swap gates increases, the fidelity decreases. Therefore, the assignment of physical qubits to circuit qubits is performed such that the number of swap gates included in the converted quantum circuit is minimized.

Note that the quantum circuit may include a conditional branch circuit (for example, if-else) that selects a series of gate operations to be executed according to a measurement result. The quantum circuit may also include a loop circuit that repeats processing according to a measurement result. The measurement result in the quantum circuit is unknown until the quantum circuit is executed, and the branch destination of the conditional branch circuit and the number of repetitions of the loop circuit are not determined before executing the quantum circuit.

Accordingly, for example, a method for estimating the fidelity of quantum hardware has been proposed. A method for optimizing a quantum circuit that includes a step of replacing an identified set of quantum circuit gates with a template of quantum circuit gates has also been proposed. The template of quantum circuit gates in this method has a lower quantum cost than the identified set of quantum circuit gates. Furthermore, a method has been proposed in which the fidelity of each subcircuit is estimated, and an estimated fidelity of a quantum processor is obtained by multiplying the estimated circuit fidelities of the respective subcircuits. In addition, a method has been proposed that enables standard verification of the reliability of a quantum device and estimates a quantum state with fewer resources.

Citation List

Patent Literature

PTL1: Japanese Laid-open Patent Publication No. 2022-167926
PTL2: Japanese National Publication of International Patent Application No. 2022-521143
PTL3: U.S. Patent Application Publication No. 2022/0383180
PTL4: U.S. Patent Application Publication No. 2021/0374589

Summary of Invention

**EP 4 742 115 A1**

Technical Problem

However, in conventional techniques for converting a quantum circuit, a relationship between an assignment of physical qubits to respective qubits indicated in a dynamic quantum circuit including a conditional branch circuit or a loop circuit and the number of swap gates to be executed is not sufficiently taken into consideration. As a result, the number of executions of swap gates becomes excessive, and the fidelity of quantum computation deteriorates in some cases.

In one aspect, this disclosure is intended to improve the fidelity of quantum computation in accordance with a dynamic quantum circuit.

Solution to Problem

In one aspect, a quantum computation support program is provided that causes a computer to execute the following processing.

The computer generates, based on a first dynamic quantum circuit in which a gate operation to be executed varies in accordance with a measurement result of a quantum state at a predetermined measurement point for a qubit, a plurality of candidate assignments indicating candidates of a plurality of second qubits in a quantum computer to be assigned to a plurality of first qubits indicated in the first dynamic quantum circuit. The computer generates, based on each of the plurality of candidate assignments, respective second dynamic quantum circuits that are capable of performing a gate operation equivalent to the gate operation of the first dynamic quantum circuit while satisfying a gate-operation-related constraint condition in the quantum computer. The computer acquires measurement results at the predetermined measurement point in a plurality of quantum computations executed in accordance with the respective second dynamic quantum circuits corresponding to a part of the plurality of candidate assignments. The computer calculates, based on the measurement results, an index value affecting fidelity when the plurality of quantum computations is executed in accordance with the respective second dynamic quantum circuits corresponding to the plurality of candidate assignments. The computer then determines, based on the index value of each of the plurality of candidate assignments, an assignment of the plurality of second qubits to the plurality of first qubits.

Advantageous Effects of Invention

In one aspect, the fidelity of quantum computation in accordance with a dynamic quantum circuit is improved.

The above and other objects, features, and advantages of the invention will become apparent from the following description in conjunction with the accompanying drawings, which illustrate preferred embodiments of the invention by way of example.

Brief Description of Drawings

[FIG. 1] FIG. 1 illustrates an example of a quantum computation support method according to a first embodiment.
[FIG. 2] FIG. 2 illustrates an example of a configuration of a quantum computation system.
[FIG. 3] FIG. 3 illustrates an example of a hardware configuration of devices that make up the quantum computation system.
[FIG. 4] FIG. 4 illustrates an example of a quantum circuit.
[FIG. 5] FIG. 5 illustrates an example of a dynamic quantum circuit including a conditional branch circuit.
[FIG. 6] FIG. 6 illustrates an example of a dynamic quantum circuit including a loop circuit.
[FIG. 7] FIG. 7 illustrates an example of conversion into native gates.
[FIG. 8] FIG. 8 illustrates an example of qubit assignment in accordance with hardware constraints.
[FIG. 9] FIG. 9 illustrates an example in which qubit assignment is changed within a quantum circuit.
[FIG. 10] FIG. 10 illustrates an example of functions for quantum computation in a classical computer.
[FIG. 11] FIG. 11 illustrates an example of topology information.
[FIG. 12] FIG. 12 illustrates an example of an objective function definition.
[FIG. 13] FIG. 13 is a flowchart illustrating an example of a processing procedure for quantum computation.
[FIG. 14] FIG. 14 illustrates an example of a dynamic quantum circuit to be processed.
[FIG. 15] FIG. 15 illustrates an example of a candidate assignment set.
[FIG. 16] FIG. 16 illustrates a first example of an executable quantum circuit.
[FIG. 17] FIG. 17 illustrates a second example of an executable quantum circuit.
[FIG. 18] FIG. 18 illustrates a first example of selection of an executable quantum circuit according to branch probabilities.

3

[FIG. 19] FIG. 19 illustrates an example of a result of executing an executable quantum circuit corresponding to a selected candidate assignment.

[FIG. 20] FIG. 20 illustrates a second example of selection of an executable quantum circuit according to branch probabilities.

[FIG. 21] FIG. 21 is a flowchart illustrating an example of a processing procedure for assignment determination.

[FIG. 22] FIG. 22 illustrates an example of executable quantum circuit information.

[FIG. 23] FIG. 23 illustrates an example of a dynamic quantum circuit including loop processing.

[FIG. 24] FIG. 24 illustrates an example of a value of an objective function obtained by executing an executable quantum circuit including loop processing.

Description of Embodiments

Hereinafter, embodiments will be described with reference to the drawings. Each embodiment may be implemented by combining a plurality of embodiments as long as there is no inconsistency.

[First Embodiment]

A first embodiment is a quantum computation support method that improves the fidelity of quantum computation in accordance with a dynamic quantum circuit.

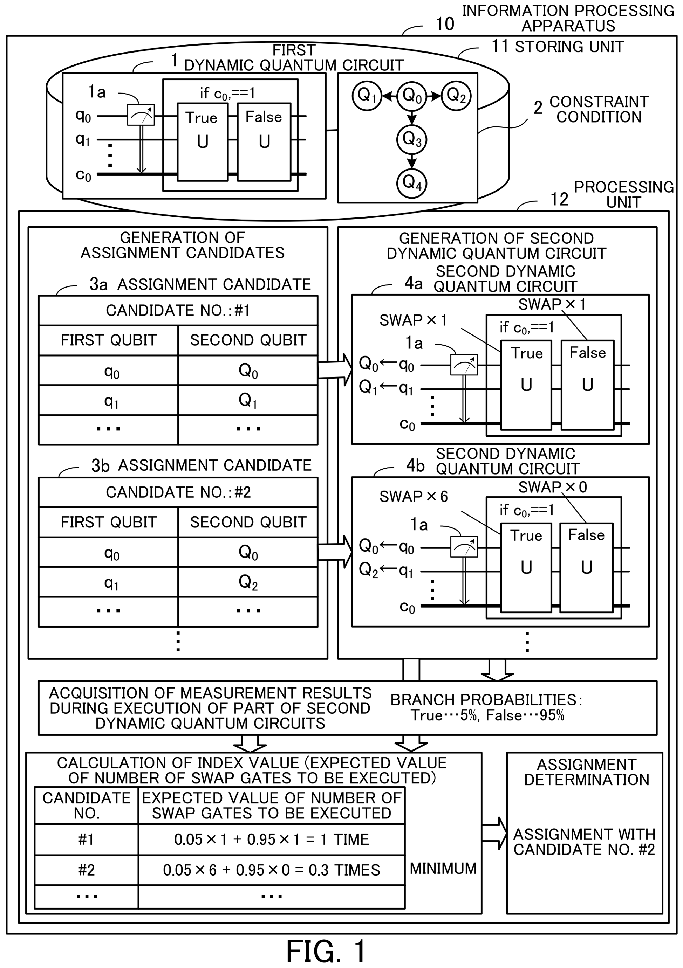

FIG. 1 illustrates an example of the quantum computation support method according to the first embodiment. FIG. 1 illustrates an information processing apparatus 10 that implements the quantum computation support method. The information processing apparatus 10 is able to implement the quantum computation support method, for example, by executing a quantum computation support program.

The information processing apparatus 10 includes a storing unit 11 and a processing unit 12. The storing unit 11 is, for example, a memory or a storage device included in the information processing apparatus 10. The processing unit 12 is, for example, a processor or an arithmetic circuit included in the information processing apparatus 10.

The storing unit 11 stores a first dynamic quantum circuit 1 and a constraint condition 2. The first dynamic quantum circuit 1 is a quantum circuit in which gate operations to be executed vary in accordance with measurement results of quantum states at a predetermined measurement point 1a for first qubits specified as targets for operation. For example, the first dynamic quantum circuit 1 includes a conditional branch circuit that executes one of a first subcircuit or a second subcircuit according to the measurement results at the measurement point.

The constraint condition 2 indicates constraints regarding gate operations in a quantum computer. For example, the constraint condition 2 restrictively specifies, among a plurality of second qubits (physical qubits) included in the quantum computer that executes quantum computation, pairs of second qubits on which a two-qubit gate operation is executable. In this case, a two-qubit gate operation between second qubits not specified in the constraint condition 2 is not executed in the quantum computer.

The constraint condition 2 may also specify, among two second qubits that are targets for operation, a second qubit to serve as a control qubit and a second qubit to serve as a target qubit. Furthermore, the constraint condition 2 may specify types of quantum gates (native gates) executable by the quantum computer.

The processing unit 12 generates a quantum circuit that allows the quantum computer to execute quantum computation with high fidelity based on the first dynamic quantum circuit 1. For example, the processing unit 12 executes the following processing.

The processing unit 12 generates a plurality of assignment candidates 3a, 3b, and so on indicating candidates for a plurality of second qubits in the quantum computer to be assigned to a plurality of first qubits indicated in the first dynamic quantum circuit 1, based on the first dynamic quantum circuit 1.

Next, the processing unit 12 generates a plurality of second dynamic quantum circuits 4a, 4b, and so on that perform gate operations equivalent to those of the first dynamic quantum circuit 1 while satisfying the constraint condition 2, based on each of the plurality of assignment candidates 3a, 3b, and so on. For example, when the first dynamic quantum circuit 1 includes a conditional branch circuit, the processing unit 12 generates the plurality of second dynamic quantum circuits 4a, 4b, and so on that satisfy the constraint condition 2 by adding a swap gate to at least one of the first subcircuit and the second subcircuit as a branch destination.

Next, the processing unit 12 acquires measurement results at the measurement point 1a in a plurality of quantum computations performed in accordance with second dynamic quantum circuits corresponding to a part of the plurality of assignment candidates 3a, 3b, and so on. The processing unit 12 calculates, based on the measurement results, an index value indicating an influence on fidelity when quantum computation is executed in accordance with the second dynamic quantum circuit 4a, 4b, and so on corresponding to each of the plurality of assignment candidates 3a, 3b, and so on.

For example, the processing unit 12 calculates, as the index value, an expected value of the number of swap gates to be executed when quantum computation is executed in accordance with the second dynamic quantum circuits 4a, 4b, and so on. When the first dynamic quantum circuit 1 includes a conditional branch circuit, the processing unit 12 calculates the expected value based on the number of executions of the first subcircuit and the number of executions of the second subcircuit in a plurality of quantum computations executed in accordance with the first dynamic quantum circuit 1, according to the measurement results at the measurement point 1a.

Then, the processing unit 12 determines, based on the index values of the respective plurality of assignment candidates 3a, 3b, and so on, an assignment of the plurality of second qubits to the plurality of first qubits. For example, the processing unit 12 determines the assignment of the plurality of second qubits to the plurality of first qubits based on a first assignment candidate among the plurality of assignment candidates 3a, 3b, and so on that provides an index value indicating higher fidelity than index values of other assignment candidates.

When the qubit assignment is performed in accordance with the assignment determined in this manner and the second dynamic quantum circuit corresponding to the assignment is generated, quantum computation with high fidelity is executed by the quantum computer based on the second dynamic quantum circuit. In other words, the fidelity of quantum computation in accordance with the dynamic quantum circuit is improved.

For example, the processing unit 12 causes the quantum computer to execute quantum computation in accordance with the second dynamic quantum circuit corresponding to the determined assignment. The processing unit 12 then outputs the result of the quantum computation performed by the quantum computer as a computation result of the first dynamic quantum circuit 1. In this case, because the number of executions of swap gates is kept small, deterioration of fidelity caused by the execution of swap gates is suppressed. That is, the fidelity is improved compared with a case where a different assignment is performed.

In the example illustrated in FIG. 1, the second dynamic quantum circuit 4a is generated in accordance with the assignment indicated in the assignment candidate 3a having a candidate number "#1". The second dynamic quantum circuit 4b is generated in accordance with the assignment indicated in the assignment candidate 3b having a candidate number "#2".

When the second dynamic quantum circuit 4a is compared with the first dynamic quantum circuit 1, one swap gate is added to the first subcircuit that is executed when the measurement result at the measurement point 1a is "1" (True). In addition, one swap gate is added to the second subcircuit that is executed when the measurement result at the measurement point 1a is "0" (False).

When the second dynamic quantum circuit 4b is compared with the first dynamic quantum circuit 1, six swap gates are added to the first subcircuit that is executed when the measurement result at the measurement point 1a is "1" (True). In addition, no swap gate is added to the second subcircuit that is executed when the measurement result at the measurement point 1a is "0" (False).

At this time, suppose that, as a result of quantum computation based on second dynamic quantum circuits corresponding to a part of the assignment candidates, the probability that the measurement result at the measurement point 1a is "1" (True) is 5%, and the probability that the measurement result is "0" (False) is 95%. In this case, the expected value (index value) of the number of swap gates to be executed is "1" when the assignment candidate 3a having the candidate number "#1" is adopted. The expected value becomes "0.3" when the assignment candidate 3b having the candidate number "#2" is adopted.

If "0.3" is the minimum among the plurality of assignment candidates 3a, 3b, and so on, the assignment according to the assignment candidate 3b having the candidate number "#2" is determined to be appropriate. When the plurality of second qubits are assigned to the plurality of first qubits in accordance with the assignment indicated in the assignment candidate 3b, the second dynamic quantum circuit 4b satisfying the constraint condition 2 is generated. When the quantum computer executes quantum computation based on the second dynamic quantum circuit 4b, the number of swap gates to be executed is reduced, and high fidelity is obtained.

As a circuit in which gate operations to be executed vary in accordance with the measurement result at the measurement point 1a, there is a loop circuit in addition to a conditional branch circuit. The loop circuit includes the measurement point 1a and indicates that a series of gate operations is repeatedly executed in accordance with the measurement result at the measurement point.

When the first dynamic quantum circuit 1 includes a loop circuit, the processing unit 12 generates the plurality of second dynamic quantum circuits 4a, 4b, and so on that satisfy the constraint condition 2 by adding swap gates to the loop circuit. The processing unit 12 then calculates, as the index value, an expected value of the number of swap gates to be executed when quantum computation is executed in accordance with the plurality of second dynamic quantum circuits 4a, 4b, and so on, based on an average number of repetitions of the loop circuit. This enables correct calculation of the index value even when the first dynamic quantum circuit 1 includes a loop circuit.

The processing unit 12 may repeatedly execute N times (N is a natural number) a process of acquiring measurement results and a process of calculating the index value alternately. In such a case, in the process of acquiring the measurement results from the second time onward, the processing unit 12 determines a first assignment candidate based on the index values of the respective plurality of assignment candidates 3a, 3b, and so on calculated immediately before. The processing unit 12 then acquires measurement results at the measurement point 1a in a plurality of quantum computations executed in accordance with the second dynamic quantum circuit corresponding to the first assignment candidate.

Subsequently, the processing unit 12 determines, based on the index values of the respective plurality of assignment candidates 3a, 3b, and so on calculated in the process of calculating the index value in the N-th execution, an assignment of the plurality of second qubits to the plurality of first qubits.

In this way, the processing unit 12 repeatedly executes each of the plurality of second dynamic quantum circuits and repeatedly selects the assignment candidates based on execution results. As a result, the influence of statistical error in the measurement result at the measurement point 1a caused by noise is reduced. Consequently, an accurate index value is obtained, and an appropriate assignment is achieved.

[Second Embodiment]

A second embodiment is a quantum computation system that achieves quantum computation based on gate operations with high fidelity by operating a classical computer and a quantum computer in conjunction with each other. Hereinafter, in a dynamic quantum circuit that is input as a target for quantum computation, qubits designated as targets for operation are referred to as input qubits. Input qubits are examples of the first qubits described in the first embodiment. In addition, qubits implemented by a quantum device included in the quantum computer are referred to as physical qubits. Physical qubits are examples of the second qubits described in the first embodiment.

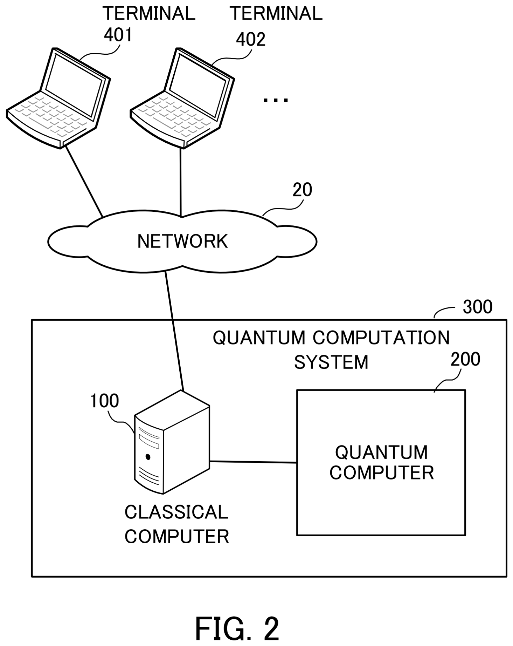

FIG. 2 illustrates an example of a configuration of the quantum computation system. A quantum computation system 300 is a computer system that employs a quantum device. The quantum computation system 300 includes a classical computer 100 and a quantum computer 200. Terminals 401, 402, and so on are connected to the classical computer 100 via a network 20. The terminals 401, 402, and so on are computers used by users who request quantum computation by the quantum computation system 300. The classical computer 100 receives computation requests including quantum circuits from the terminals 401, 402, and so on. A quantum circuit indicates an order of operations on qubits by an arrangement of elements such as gates. A qubit represents a superposition of the "0" state and the "1" state.

The classical computer 100, in accordance with the quantum circuits received from the terminals 401, 402, and so on, instructs the quantum computer 200 to execute quantum computation. The classical computer 100 also acquires measurement results of respective qubits from the quantum computer 200.

The quantum computer 200 includes a plurality of qubits and devices for operating the respective qubits. The plurality of qubits provided in the quantum computer 200 is implemented by, for example, a superconducting method, an ion-trap method, a diamond spin method, or the like.

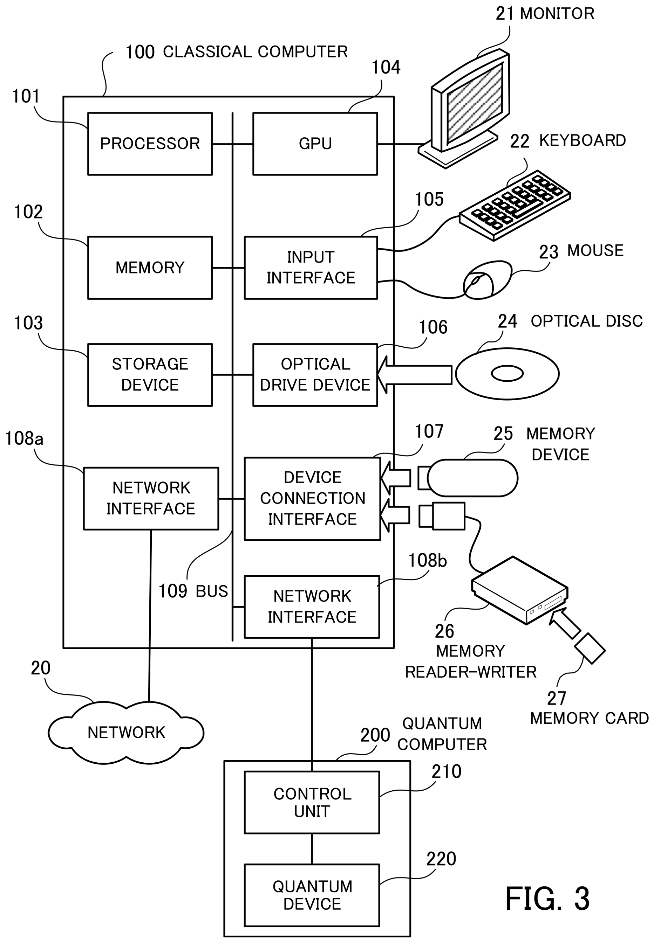

FIG. 3 illustrates an example of a hardware configuration of devices that make up the quantum computation system. The entire classical computer 100 is controlled by a processor 101. A memory 102 and a plurality of peripheral devices are connected to the processor 101 via a bus 109. The processor 101 may be a multiprocessor. The processor 101 is, for example, a central processing unit (CPU), a micro processing unit (MPU), or a digital signal processor (DSP). At least part of the functions implemented by executing programs by the processor 101 may alternatively be implemented by electronic circuits such as an application specific integrated circuit (ASIC) or a programmable logic device (PLD).

The memory 102 serves as a main storage device of the classical computer 100. The memory 102 temporarily stores at least part of programs of an operating system (OS) and application programs to be executed by the processor 101. Various data used for processing by the processor 101 are also stored in the memory 102. As the memory 102, a volatile semiconductor memory device such as a random access memory (RAM) is used.

The peripheral devices connected to the bus 109 include a storage device 103, a graphics processing unit (GPU) 104, an input interface 105, an optical drive device 106, a device connection interface 107, and network interfaces 108a and 108b.

The storage device 103 writes and reads data electrically or magnetically to and from a built-in recording medium. The storage device 103 serves as an auxiliary storage device of the classical computer 100. The OS program, application programs, and various data are stored in the storage device 103. As the storage device 103, for example, a hard disk drive (HDD) or a solid state drive (SSD) may be used.

The GPU 104 is a computation unit that performs image processing and is an example of a graphic controller. A monitor 21 is connected to the GPU 104. The GPU 104, in accordance with instructions from the processor 101, displays images on the screen of the monitor 21. Examples of the monitor 21 include a display device using organic electroluminescence (EL) and a liquid crystal display device.

A keyboard 22 and a mouse 23 are connected to the input interface 105. The input interface 105 transmits signals sent from the keyboard 22 and the mouse 23 to the processor 101. The mouse 23 is an example of a pointing device, and other pointing devices may be used. Examples of other pointing devices include a touch panel, a tablet, a touchpad, and a trackball.

The optical drive device 106 reads data recorded on, or writes data to, an optical disc 24 by using laser light or the like. The optical disc 24 is a portable recording medium on which data are recorded so as to be readable by light reflection.

Examples of the optical disc 24 include a digital versatile disc (DVD), a DVD-RAM, a compact disc read-only memory (CD-ROM), and a CD-recordable/rewriteable (CD-R/RW).

The device connection interface 107 is a communication interface for connecting peripheral devices to the classical computer 100. For example, a memory device 25 and a memory reader-writer 26 are connectable to the device connection interface 107. The memory device 25 is a recording medium equipped with a communication function for the device connection interface 107. The memory reader-writer 26 is a device that writes data to, or reads data from, a memory card 27. The memory card 27 is a card-type recording medium.

The network interface 108a is connected to the network 20. The network interface 108a transmits and receives data to and from another computer or communication device via the network 20. The network interface 108a may be a wired communication interface connected to a wired communication device such as a switch or router via a cable, or a wireless communication interface connected to a wireless communication device such as a base station or access point by radio waves.

The network interface 108b is an interface for connecting to the quantum computer 200. The processor 101 transmits a quantum circuit to the quantum computer 200 via the network interface 108b and causes the quantum computer 200 to execute quantum computation. The processor 101 also acquires results of the quantum computation via the network interface 108b.

The classical computer 100 realizes the processing functions of the second embodiment with the above hardware configuration. The apparatus described in the first embodiment is also configured to be realized by hardware similar to the classical computer 100 illustrated in FIG. 3.

The classical computer 100 realizes the processing functions of the second embodiment, for example, by executing a program recorded on a computer-readable recording medium. A program describing processing contents to be executed by the classical computer 100 is recordable on various recording media. For example, a program to be executed by the classical computer 100 is storable in the storage device 103. The processor 101 loads at least part of the program in the storage device 103 into the memory 102 and executes the program. A program to be executed by the classical computer 100 is also recordable on portable recording media such as the optical disc 24, the memory device 25, and the memory card 27. A program stored in a portable recording medium is made executable after being installed in the storage device 103 under control from the processor 101, for example. The processor 101 may alternatively read and execute a program directly from a portable recording medium.

The quantum computer 200 includes a control unit 210 and a quantum device 220. The control unit 210 executes gate operations on qubits in the quantum device in accordance with a quantum circuit. The quantum device 220 includes a plurality of qubits. The quantum device 220 is, for example, one or more quantum processing units (QPUs).

Next, a quantum circuit executable by the quantum computer 200 will be described. In a quantum circuit, operations applied to qubits are represented as an arrangement of quantum gates.

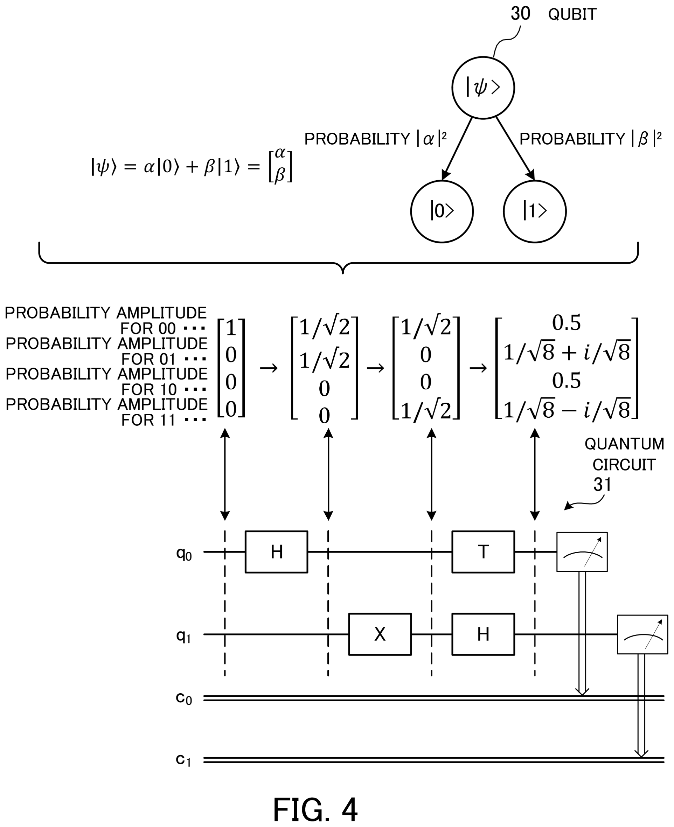

FIG. 4 illustrates an example of a quantum circuit. A qubit 30, unlike a classical bit that assumes only the state "0" or "1", assumes a superposition state $|\psi\rangle$ of "0" and "1". The superposition state $|\psi\rangle$ is expressed by the following expression:

$$|\psi\rangle = \alpha|0\rangle + \beta|1\rangle = \begin{bmatrix} \alpha \\ \beta \end{bmatrix} \qquad (1)$$

$\alpha$ is a probability amplitude indicating the probability that the state of the qubit 30 is $|0\rangle$. $|\alpha|^2$ is the probability of the state $|0\rangle$. $\beta$ is a probability amplitude indicating the probability that the state of the qubit 30 is $|1\rangle$. $|\beta|^2$ is the probability of the state $|1\rangle$.

Quantum computation proceeds by changing the state of the qubit 30. When the state of the qubit 30 is measured, a value of $|0\rangle$ or $|1\rangle$ is probabilistically obtained according to the state. Accordingly, the quantum computer 200 obtains a computation result of quantum computation by performing statistical processing of measurement results obtained by repeatedly executing the quantum computation.

The procedure of gate operations and measurement in quantum computation is modeled by a quantum circuit 31. The quantum circuit 31 represents a quantum computation using two qubits $q_0$ and $q_1$. The state of the two qubits is represented by a column vector. For example, it is assumed that the initial states of the two qubits are both $|0\rangle$. In that case, the state of the qubits is represented by Expression (2).

$$\begin{bmatrix} 1 \\ 0 \\ 0 \\ 0 \end{bmatrix} \qquad (2)$$

The first element of Expression (2) is a probability amplitude indicating that the states of both qubits are 10>. The second element is a probability amplitude indicating that the state of the first qubit is |0> and the state of the second qubit is 11>. The third element is a probability amplitude indicating that the state of the first qubit is |1> and the state of the second qubit is |0>. The fourth element is a probability amplitude indicating that the states of both qubits are |1>.

In the quantum circuit 31, a Hadamard gate (H) is first placed on the first qubit. When the gate operation of this Hadamard gate is performed, the state of the two qubits changes as represented in Expression (3).

$$\begin{bmatrix} \dfrac{1}{\sqrt{2}} \\ \dfrac{1}{\sqrt{2}} \\ 0 \\ 0 \end{bmatrix} \qquad (3)$$

Next, in the quantum circuit 31, an X gate (X) is placed on the second qubit. When the gate operation of this X gate is performed, the state of the two qubits changes as represented in Expression (4).

$$\begin{bmatrix} \dfrac{1}{\sqrt{2}} \\ 0 \\ 0 \\ \dfrac{1}{\sqrt{2}} \end{bmatrix} \qquad (4)$$

Next, in the quantum circuit 31, a T gate (T) is placed on the first qubit and a Hadamard gate (H) is placed on the second qubit. When the gate operations of these gates are performed, the state of the two qubits changes as represented in Expression (5).

$$\begin{bmatrix} \dfrac{0.5}{\dfrac{1}{\sqrt{8}}} + \dfrac{i}{\sqrt{8}} \\ \dfrac{0.5}{\dfrac{1}{\sqrt{8}}} - \dfrac{i}{\sqrt{8}} \end{bmatrix} \qquad (5)$$

Finally, in the quantum circuit 31, a measurement operation of the states of the two qubits is performed. The measurement results of the qubit states are probabilistically |0> or |1>. The measurement results are stored as "0" or "1" in classical bits $c_0$ and $c_1$. The quantum computer 200 estimates the values of $|\alpha|^2$ and $|\beta|^2$ by repeatedly performing quantum computation and measurement based on the quantum circuit 31.

A type of quantum circuit, referred to as a dynamic quantum circuit, is one in which the configuration of the circuit dynamically changes according to the state of classical bits during execution. A dynamic quantum circuit includes a conditional branch circuit or a loop circuit.

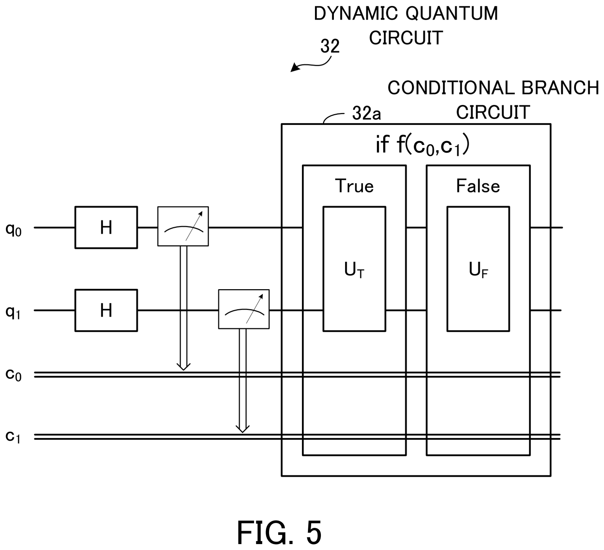

FIG. 5 illustrates an example of a dynamic quantum circuit including a conditional branch circuit. A dynamic quantum circuit 32 includes a conditional branch circuit 32a. A conditional branch instruction (if-else) used in the conditional branch circuit 32a is an instruction for selecting a group of quantum gates that are applied according to a condition f associated with classical bits. For example, when the total set of states of L (where L is a natural number) classical bits is represented as $C = \{0, 1\}^L$, the condition f is expressed as "$f : C \rightarrow$ bool". The term "bool" indicates that the condition f takes one of two values: True or False.

In the conditional branch circuit 32a illustrated in FIG. 5, if "$f(c_1, c_2)$ = True" is satisfied, a group of quantum gates "$U_T$" is applied. If "$f(c_1, c_2)$ = False" is satisfied, a group of quantum gates "$U_F$" is applied.

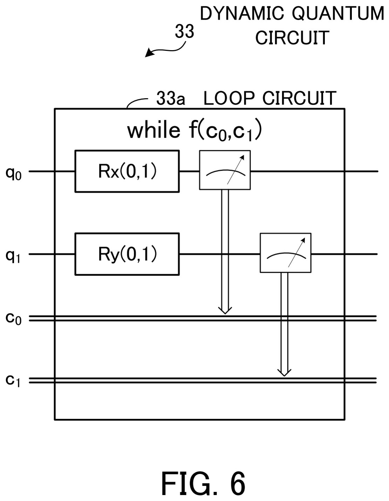

FIG. 6 illustrates an example of a dynamic quantum circuit including a loop circuit. A dynamic quantum circuit 33 includes a loop circuit 33a. A loop instruction (while-loop) used in the loop circuit 33a is an instruction for determining whether to repeatedly apply quantum gates or to exit the loop, depending on the state of classical bits. For example, in the loop circuit 33a illustrated in FIG. 6, the gate operations inside the loop circuit 33a are repeatedly applied while the value of "$f(c_1, c_2)$" remains within a predetermined range.

The conditional branch circuit and the loop circuit may be nested with each other (in a multilayer structure). In other words, a branch destination of a conditional branch circuit may include another conditional branch circuit or a loop circuit. Similarly, a loop circuit may include a conditional branch circuit or another loop circuit.

The types of quantum gates (native gates) executable in the quantum computer 200 are limited. Therefore, quantum gates included in a quantum circuit generated for solving a target problem are rendered executable by being converted into native gates of the quantum computer 200.

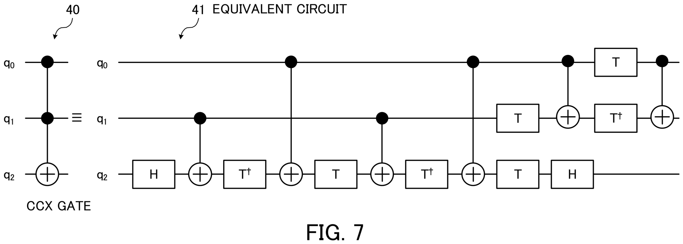

FIG. 7 illustrates an example of conversion into native gates. For example, a CCX gate 40 is decomposed into a plurality of native gates and converted into an equivalent circuit 41. The one-qubit gates and two-qubit gates included in the equivalent circuit 41 are native gates in the quantum computer 200.

Even if a quantum circuit is composed solely of native gates, the quantum circuit is not always executable in its original form due to hardware-level constraints (hardware constraints) in the quantum computer 200. In other words, there are quantum gates that are executable only on specific qubits. For example, a two-qubit gate operation is executable only on a pair of qubits that is connected to each other.

The conditions that the quantum gates included in the quantum circuit are native gates and that the physical qubits on which the quantum gates operate satisfy hardware constraints form a constraint condition for enabling the quantum circuit to be executed by the quantum computer 200.

For a simple quantum circuit, the hardware constraints are satisfied by assigning, as physical qubits that execute gate operations on input qubits indicated in the quantum circuit, appropriate physical qubits to the respective input qubits.

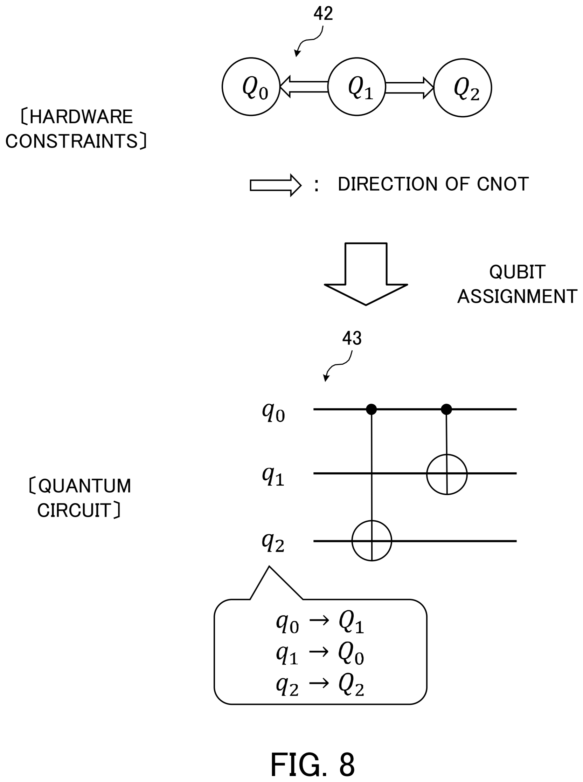

FIG. 8 illustrates an example of qubit assignment in accordance with hardware constraints. For example, the hardware constraints are expressed as an effective graph 42. Nodes of the effective graph 42 correspond to physical qubits, and arrows connecting the nodes indicate pairs of physical qubits on which a CNOT gate operation is executable. The origin of an arrow is a control bit, and the tip of the arrow is a target bit. The effective graph 42 illustrates that a CNOT gate operation is executable with a physical qubit $Q_1$ as a control bit and a physical qubit $Q_0$ as a target bit. The effective graph 42 also illustrates that a CNOT gate operation is executable with the physical qubit $Q_1$ as a control bit and a physical qubit $Q_2$ as a target bit. A CNOT gate operation is not executable between physical qubits other than these pairs.

Assuming that a quantum circuit 43 is executed under such hardware constraints, the quantum circuit 43 includes three input qubits $q_0$, $q_1$, and $q_2$. The first quantum gate is a CNOT gate in which the input qubit $q_0$ is a control bit and the input qubit $q_2$ is a target bit. The second quantum gate is a CNOT gate in which the input qubit $q_0$ is a control bit and the input qubit $q_1$ is a target bit.

In this case, the quantum circuit 43 is executed by assigning the physical qubit $Q_1$ to the input qubit $q_0$, the physical qubit $Q_0$ to the input qubit $q_1$, and the physical qubit $Q_2$ to the input qubit $q_2$.

Note that a quantum circuit corresponding to a problem to be solved is complex, and in many cases the hardware constraints are not satisfied solely by the initial assignment of qubits. Therefore, appropriate qubit assignment is carried out for each step of gate operations according to the quantum circuit.

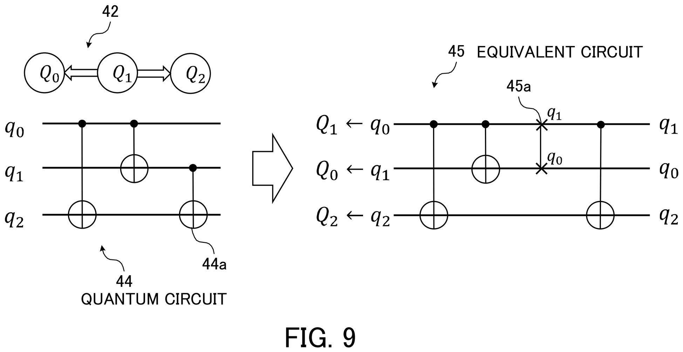

FIG. 9 illustrates an example in which qubit assignment is changed within a quantum circuit. For example, assume that a quantum circuit 44 is executed under the constraint condition represented by the effective graph 42. The quantum circuit 44 includes one additional quantum gate 44a compared to the quantum circuit 43 illustrated in FIG. 8. The additional quantum gate 44a is a CNOT gate in which the input qubit $q_1$ is a control bit and the input qubit $q_2$ is a target bit. In this case, even if qubit assignment is performed in the same manner as in FIG. 8, the additional quantum gate is not executable due to the hardware constraints.

Therefore, the quantum circuit 44 is converted into an equivalent circuit 45 involving a change in qubit assignment. The equivalent circuit 45 has an additional swap gate 45a for changing the physical qubit assigned to each input qubit. By changing the qubit assignment in the middle of the equivalent circuit 45 using the swap gate 45a, execution of the equivalent circuit 45 is enabled.

Changing the qubit assignment in this way is referred to as routing. Hereinafter, "qubit assignment" is intended to include both initial assignment of qubits and routing.

When multiple quantum circuits that satisfy the hardware constraints are generable by performing routing, it is preferably designed to generate a quantum circuit with as few quantum gates as possible. This is because current quantum computers are called noisy intermediate-scale quantum (NISQ) computers, which are significantly affected by noise. Noise causes degradation in fidelity.

Accordingly, qubit assignment is designed so that the overall fidelity of the circuit becomes higher. For example, simply inserting swap gates increases the number of gates, which in turn reduces the overall fidelity due to the influence of noise. Therefore, it is desirable to reduce the number of swap gates. In addition, to improve fidelity, for example, the cumulative noise effect per gate for each qubit is calculated, and a qubit assignment with the smallest influence is selected. Furthermore, since the execution time of gates varies depending on each qubit, qubit assignment may also be designed so as to shorten the execution time of the quantum circuit.

Here, a function whose value is expected to decrease when the overall fidelity becomes higher is referred to as an "objective function". The value of the objective function is an example of the index value described in the first embodiment.

Variables used for calculating the value of the objective function include the number of swap gates, the cumulative noise effect per gate, and execution time. In the case of a static quantum circuit, among a plurality of quantum circuits that is equivalent to the quantum circuit and satisfies the hardware constraints, the one whose objective function is minimized is used for actual quantum computation, thereby obtaining a computation result with high fidelity. On the other hand, in the case of a dynamic quantum circuit, it is not easy to identify the quantum circuit that minimizes the objective function.

Examples of methods for estimating the value of the objective function in a dynamic quantum circuit include the following.

For example, the classical computer 100 expands the circuit by either summing the values of the objective function of each branch of an if-else statement or assuming that only one branch is selected, and then calculates the value of the objective function by treating the circuit as a static circuit. The classical computer 100 also, regarding loop processing, expands the circuit by assuming that the number of loop iterations is fixed at k times (where k is a natural number) and calculates the value of the objective function by treating the circuit as a static circuit.

However, such static analysis does not take into account parameters that become known only at runtime (dynamic parameters), such as the branch selection probability of each branch destination in an if-else statement or the number of loop iterations. As a result, the estimated value of the objective function obtained by calculation deviates from the actual value of the objective function when the quantum circuit is executed. If the estimated value of the objective function is inaccurate, quantum computation is executed using an inappropriate quantum circuit, thereby decreasing fidelity.

To address this, in the second embodiment, the classical computer 100 performs qubit assignment so that, when multiple qubit assignments are available for a dynamic quantum circuit, the expected value of the objective function is minimized when the quantum computation is actually executed on the quantum computer 200 implemented as a NISQ computer. The classical computer 100 selects such an assignment in a feedback-directed manner. (i.e., based on the results of actual quantum computation).

For example, the classical computer 100 actually executes the dynamic quantum circuit and acquires statistical data such as the probability that each branch destination of a conditional branch is selected or the number of loop iterations. Based on the acquired data, the classical computer 100 estimates the expected value of the objective function. Then, the classical computer 100 selects the assignment that minimizes the expected value.

This approach makes it possible to take into account parameters that become known only at runtime and suppress the deviation between the estimated value of the objective function and the actual value of the objective function when executed. Furthermore, the classical computer 100 may repeatedly perform the above operation (N times) to calculate the estimated value of the objective function more accurately by reducing the influence of noise. Repeated execution allows for more accurate estimation of the objective function and selection of a more appropriate assignment.

The classical computer 100 sets the number of repetitions N to be smaller than the number of assignment candidates M (where M is a natural number). As a result, the number of executions on actual hardware is reduced to N/M compared to a case in which the value of the objective function is obtained by executing all (M) assignment candidates on the actual hardware.

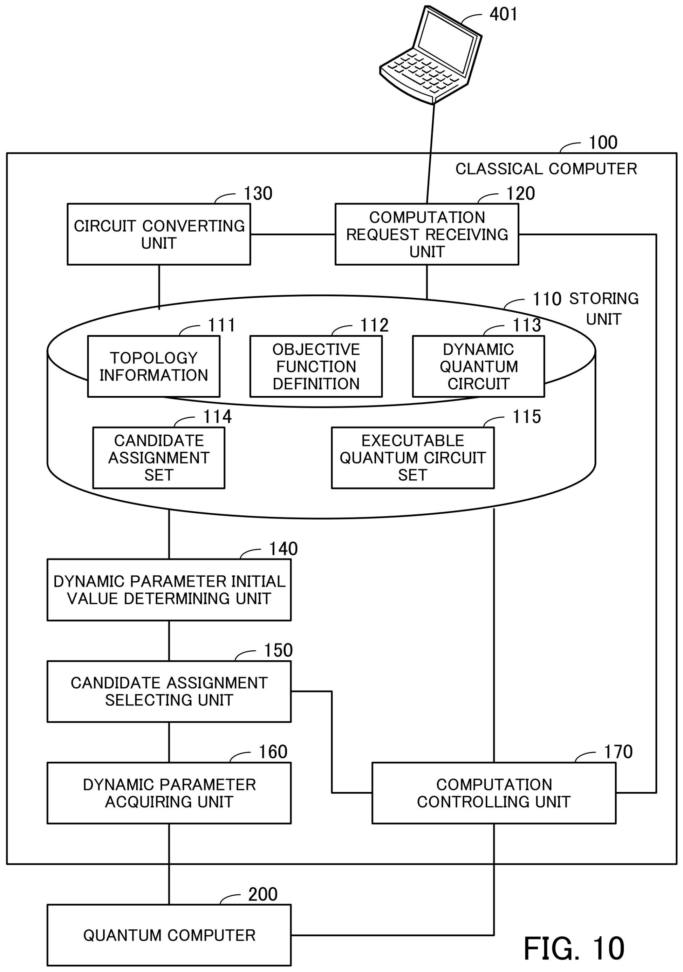

FIG. 10 illustrates an example of functions for quantum computation in the classical computer. The classical computer 100 includes a storing unit 110, a computation request receiving unit 120, a circuit converting unit 130, a dynamic parameter initial value determining unit 140, a candidate assignment selecting unit 150, a dynamic parameter acquiring unit 160, and a computation controlling unit 170.

The storing unit 110 stores topology information 111, an objective function definition 112, a dynamic quantum circuit 113, a candidate assignment set 114, and an executable quantum circuit set 115. The topology information 111 is information indicating the connection relationship between physical qubits. The objective function definition 112 is information indicating a method for calculating the value of the objective function. The dynamic quantum circuit 113 is a dynamic quantum circuit designated as a target for quantum computation. The candidate assignment set 114 is information indicating a plurality of candidate assignments between input qubits and physical qubits. The executable quantum circuit set 115 is a set of dynamic quantum circuits, to which qubits have been assigned, that are executable by the quantum computer 200.

The computation request receiving unit 120 receives a computation request for the dynamic quantum circuit 113 from the terminal 401. The computation request receiving unit 120 stores the dynamic quantum circuit 113 included in the received computation request in the storing unit 110. The computation request receiving unit 120 also transmits a computation result to the terminal 401 when the computation result of quantum computation is acquired from the computation controlling unit 170.

The circuit converting unit 130 generates a plurality of candidate assignments of physical qubits that satisfy hardware constraints for the input qubits that are targets of operations in the dynamic quantum circuit 113 indicated in the computation request. The circuit converting unit 130 stores the generated plurality of candidate assignments in the storing unit 110 as the candidate assignment set 114.

The circuit converting unit 130 also converts the dynamic quantum circuit 113 into a quantum circuit executable by the quantum computer 200 (hereinafter referred to as an "executable quantum circuit") based on each of the generated candidate assignments. The executable quantum circuit is composed of native gates (one-qubit gates or two-qubit gates) of the quantum computer 200. The two-qubit gates included in the executable quantum circuit are configured such that the physical qubits assigned to the input qubits that are targets of operations satisfy the hardware constraints indicated by the topology information 111. The circuit converting unit 130 stores the plurality of generated executable quantum circuits in the storing unit 110 as the executable quantum circuit set 115.

The dynamic parameter initial value determining unit 140 determines initial values of dynamic parameters used for calculating the value of the objective function related to the dynamic quantum circuit 113. Dynamic parameters are parameters whose values are determined by executing the dynamic quantum circuit 113. As dynamic parameters, there are transition probabilities for transitions to the respective branch destinations in conditional branches. The dynamic parameters also include the number of loop iterations in loop processing.

The candidate assignment selecting unit 150 selects a candidate assignment of qubits according to the values of dynamic parameters whenever the initial values of the dynamic parameters are set or the values are updated. For example, the candidate assignment selecting unit 150 calculates the value of the objective function of an executable quantum circuit corresponding to each candidate assignment based on the values of the dynamic parameters. The candidate assignment selecting unit 150 then selects the candidate assignment whose objective function value is the smallest. When the number of times the dynamic parameter values are updated reaches a predetermined number, the candidate assignment selecting unit 150 notifies the computation controlling unit 170 of the last selected candidate assignment.

The dynamic parameter acquiring unit 160 acquires the values of dynamic parameters based on a computation result of quantum computation executed in accordance with an executable quantum circuit corresponding to the selected candidate assignment. For example, the dynamic parameter acquiring unit 160 instructs the quantum computer 200 to execute quantum computation in accordance with the executable quantum circuit corresponding to the selected candidate assignment. The quantum computation is then repeatedly executed in the quantum computer 200 a predetermined number of times. The dynamic parameter acquiring unit 160 acquires execution paths for each quantum computation from the quantum computer 200. The execution information includes information indicating the branch destination in a conditional branch circuit and the number of loop iterations in a loop circuit. The dynamic parameter acquiring unit 160 statistically calculates the branch probabilities and the expected value of the number of loop iterations based on the execution paths for each quantum computation.

The computation controlling unit 170 acquires the computation result of the quantum computation executed in accordance with the executable quantum circuit corresponding to the candidate assignment last selected by the candidate assignment selecting unit 150, and transmits the computation result to the computation request receiving unit 120. For example, the computation controlling unit 170 instructs the quantum computer 200 to execute quantum computation in accordance with the executable quantum circuit. The quantum computation is executed in the quantum computer 200, and a computation result is returned. The computation controlling unit 170 transmits the computation result acquired from the quantum computer 200 to the computation request receiving unit 120.

The functions of the respective components illustrated in FIG. 10 are implementable, for example, by causing the processor 101 to execute program modules corresponding to the respective components.

Among the pieces of information stored in the storing unit 110, the topology information 111 and the objective function definition 112 are pieces of information prepared by an administrator prior to execution of quantum computation by the dynamic quantum circuit 113.

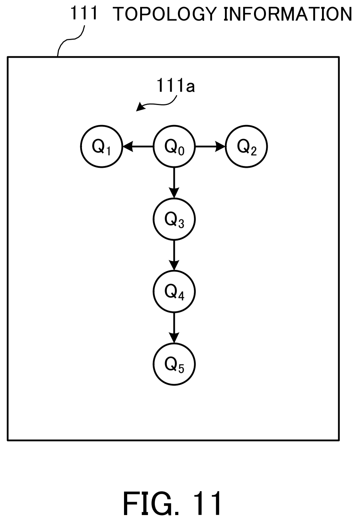

FIG. 11 illustrates an example of topology information. Topology information 111 is represented by a directed graph 111a, in which physical qubits are represented as nodes, and arrows (edges) indicate the relationships among physical qubits that are connected in a quantum device. In the topology information 111 illustrated in FIG. 11, the relationships among six physical qubits $Q_0$ to $Q_5$ are illustrated. The structure of the directed graph 111a is as follows.

An edge is provided from the physical qubit $Q_0$ as a source node to the physical qubit $Q_1$ as a destination node. An edge is provided from the physical qubit $Q_0$ as a source node to the physical qubit $Q_2$ as a destination node. An edge is provided from the physical qubit $Q_0$ as a source node to the physical qubit $Q_3$ as a destination node. An edge is provided from the physical qubit $Q_3$ as a source node to the physical qubit $Q_4$ as a destination node. An edge is provided from the physical qubit $Q_4$ as a source node to the physical qubit $Q_5$ as a destination node.

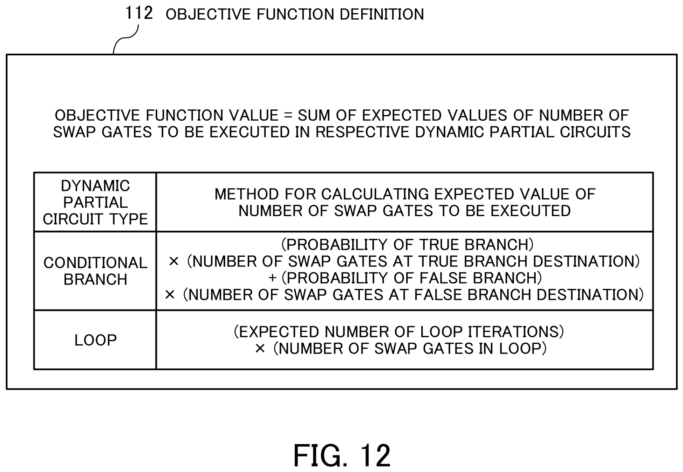

FIG. 12 illustrates an example of an objective function definition. The objective function definition 112 indicates a method of calculating the value of the objective function. In the example illustrated in FIG. 12, the value of the objective function is the expected value of the number of swap gates to be executed when the dynamic quantum circuit is executed.

Accordingly, in the objective function definition 112, for example, the method for calculating the expected value of the number of swap gates to be executed for each type of dynamic partial circuits is defined. For example, the method for calculating the expected value of the number of swap gates to be executed in a conditional branch is defined as follows: "(probability of the True branch) × (number of swap gates at the True branch destination) + (probability of the False branch) × (number of swap gates at the False branch destination)". In addition, the method for calculating the expected value of the number of swap gates to be executed in a loop is defined as follows: "(expected value of number of loop iterations) × (number of swap gates in the loop)".

Furthermore, the objective function definition 112 indicates that the value of the objective function is calculated as: "objective function value = sum of the expected values of the number of swap gates to be executed in the respective dynamic partial circuits". Based on the objective function definition 112, the value of the objective function (the expected value of the number of swap gates to be executed) of an executable quantum circuit is calculated.

After the topology information 111 and the objective function definition 112 are prepared, when, for example, a computation request is transmitted from the terminal 401 to the quantum computation system 300, quantum computation is executed in the quantum computation system 300. The computation request includes a quantum circuit to be subjected to computation.

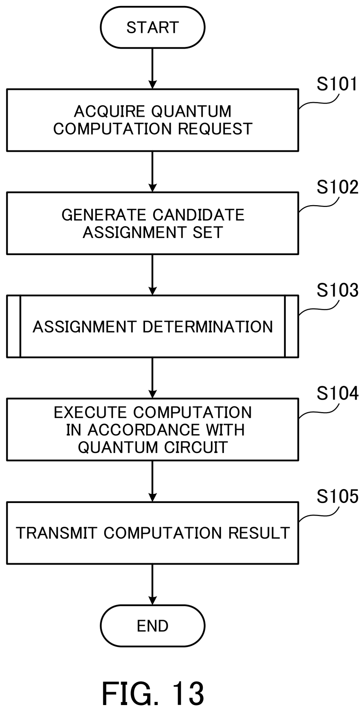

FIG. 13 is a flowchart illustrating an example of a processing procedure for quantum computation. The processing illustrated in FIG. 13 will be described below in accordance with the step numbers.

[Step S101] The computation request receiving unit 120 receives a computation request for quantum computation from one of the terminals 401, 402, and so on. It is assumed that the received computation request includes the dynamic quantum circuit 113 as a computation target of quantum computation. The computation request receiving unit 120 stores the dynamic quantum circuit 113 included in the received computation request in the storing unit 110.

[Step S102] The circuit converting unit 130 generates the candidate assignment set 114 of physical qubits for the input qubits indicated in the dynamic quantum circuit 113. Each candidate assignment is a list of physical qubits corresponding to the respective input qubits. The circuit converting unit 130 also generates, in association with each candidate assignment, an equivalent circuit (executable quantum circuit) of the dynamic quantum circuit 113 that satisfies hardware constraints when the assignment indicated by the candidate assignment is applied. The circuit converting unit 130 stores the candidate assignment set 114 including a plurality of candidate assignments and the executable quantum circuit set 115 including executable quantum circuits corresponding to the respective candidate assignments in the storing unit 110.

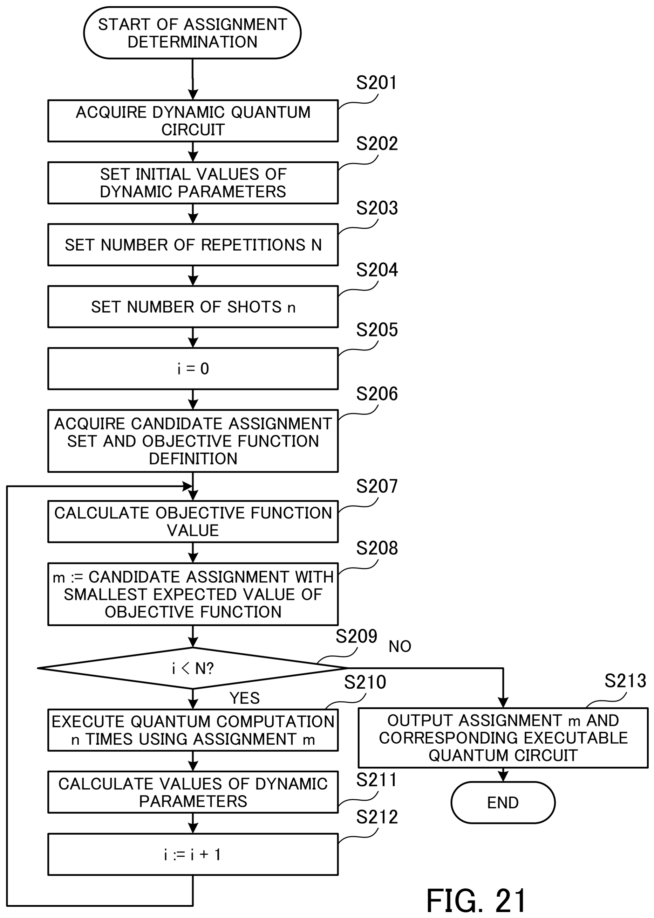

[Step S103] The dynamic parameter initial value determining unit 140, the candidate assignment selecting unit 150, and the dynamic parameter acquiring unit 160 cooperate to perform an assignment determination process. Details of the assignment determination process will be described later (see FIG. 21).

[Step S104] The computation controlling unit 170 controls execution of quantum computation in accordance with the executable quantum circuit. For example, the computation controlling unit 170 instructs the quantum computer 200 to execute quantum computation in accordance with the executable quantum circuit. At that time, the computation controlling unit 170 specifies which physical qubits are assigned to which input qubits in the executable quantum circuit.

Note that the number of times quantum computation is executed to obtain the final computation result by the computation controlling unit 170 does not have to be the same as the number of times quantum computation is executed for assignment determination. For example, the candidate assignment selecting unit 150 may execute quantum computation 1000 times for each assignment (with a shot number n = 1000) in the assignment determination process to obtain statistical data. After the assignment is determined, the computation controlling unit 170 may execute quantum computation 100,000 times to obtain a computation result with high accuracy.

The quantum computer 200 executes quantum computation in accordance with the executable quantum circuit in response to the instruction. The quantum computer 200 then transmits the computation result to the computation controlling unit 170. The computation controlling unit 170 transmits the acquired computation result to the computation request receiving unit 120.

[Step S105] The computation request receiving unit 120 transmits the computation result acquired from the computation controlling unit 170 to the terminal device that transmitted the computation request, as the computation result of the dynamic quantum circuit 113.

In this way, an appropriate assignment of qubits is performed for the dynamic quantum circuit 113 as a computation target, and quantum computation is executed.

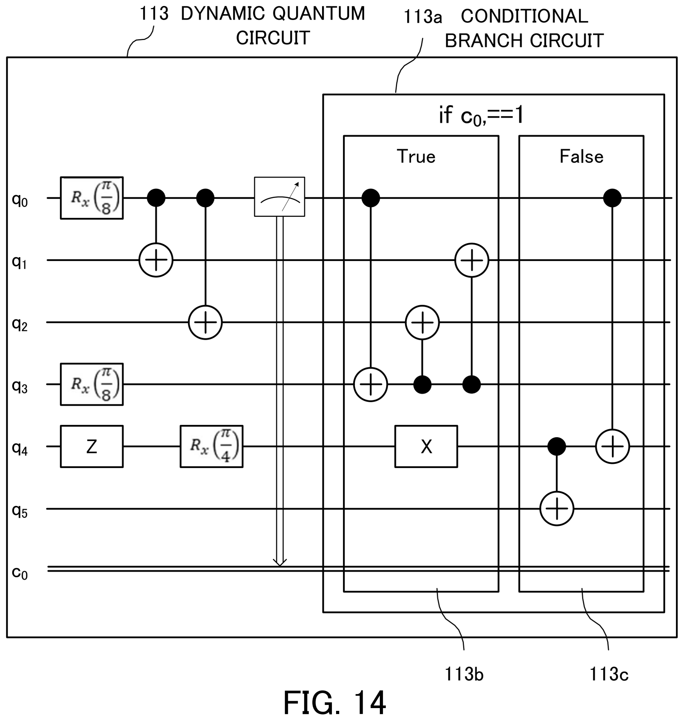

FIG. 14 illustrates an example of a dynamic quantum circuit to be processed. For example, the dynamic quantum circuit 113 includes a conditional branch circuit 113a. The conditional branch circuit 113a indicates that a different partial circuit is executed depending on whether the measurement result set to a classical bit $c_0$ by the immediately preceding measurement is "1". For example, if the value of the classical bit $c_0$ is "1", a partial circuit 113b is executed, and if the value of the classical bit $c_0$ is "0", a partial circuit 113c is executed.

The computation request receiving unit 120, which has acquired the above-described dynamic quantum circuit 113, generates the candidate assignment set 114 corresponding to the dynamic quantum circuit 113.

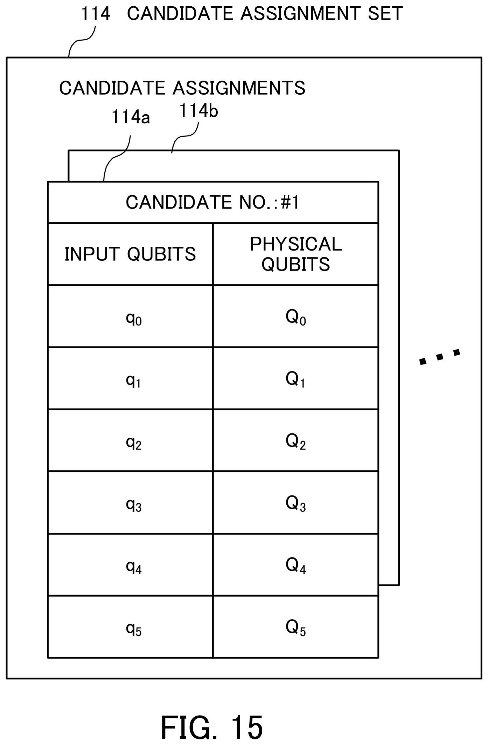

FIG. 15 illustrates an example of a candidate assignment set. The candidate assignment set 114 includes a plurality of candidate assignments 114a, 114b, and so on. Each of the candidate assignments 114a, 114b, and so on is assigned an identification number for identification. Each of the candidate assignments 114a, 114b, and so on indicates a correspondence relationship between the input qubits indicated in the dynamic quantum circuit 113 and the physical qubits assigned to the respective input qubits.

An executable quantum circuit that satisfies the hardware constraints is generated according to each of the candidate assignments 114a, 114b, and so on.

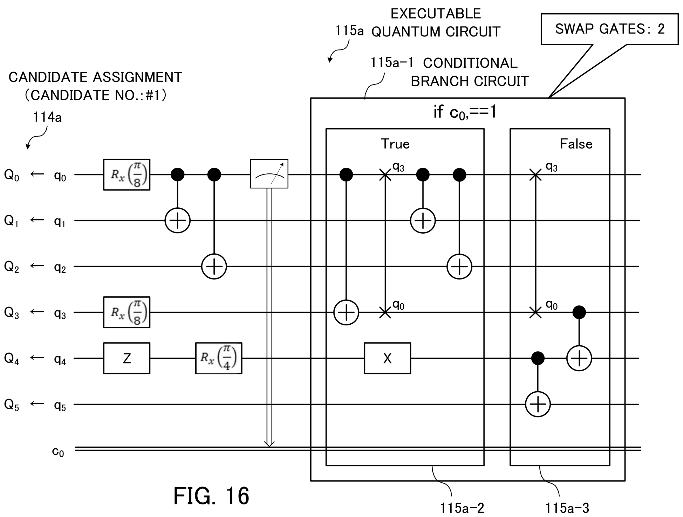

FIG. 16 illustrates a first example of an executable quantum circuit. FIG. 16 illustrates an executable quantum circuit 115a corresponding to the candidate assignment 114a with a candidate number "#1". The assignment relationship in the candidate assignment 114a is as follows.

The physical qubit $Q_0$ is assigned to the input qubit q0. The physical qubit $Q_1$ is assigned to the input qubit $q_1$. The physical qubit $Q_2$ is assigned to the input qubit $q_2$. The physical qubit $Q_3$ is assigned to the input qubit $q_3$. The physical qubit $Q_4$ is assigned to the input qubit $q_4$. The physical qubit $Q_5$ is assigned to the input qubit $q_5$.

The executable quantum circuit 115a is an equivalent circuit of the dynamic quantum circuit 113 (see FIG. 14). In the executable quantum circuit 115a, the conditional branch circuit 113a in the dynamic quantum circuit 113 is converted into a conditional branch circuit 115a-1 that satisfies the hardware constraints.

In the converted conditional branch circuit 115a-1, one swap gate is added to a partial circuit 115a-2, which is executed when the branch condition is True. As a result of adding the swap gate, the assignment destination of the physical qubit $Q_0$ is changed from the input qubit $q_0$ to the input qubit $q_3$, and the assignment destination of the physical qubit $Q_3$ is changed from the input qubit $q_3$ to the input qubit $q_0$.

Similarly, one swap gate is added to a partial circuit 115a-3, which is executed when the branch condition is False. As a result of adding the swap gate, the assignment destination of the physical qubit $Q_0$ is changed from the input qubit $q_0$ to the input qubit $q_3$, and the assignment destination of the physical qubit $Q_3$ is changed from the input qubit $q_3$ to the input qubit $q_0$.

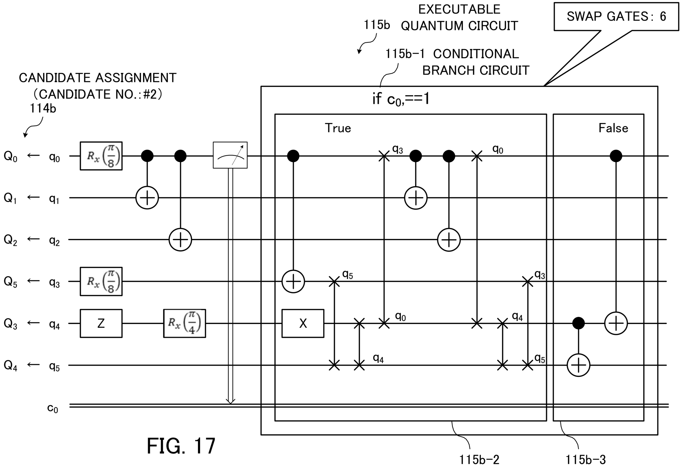

FIG. 17 illustrates a second example of an executable quantum circuit. FIG. 17 illustrates an executable quantum circuit 115b corresponding to the candidate assignment 114b with a candidate number "#2". The assignment relationship in the candidate assignment 114b is as follows.

The physical qubit $Q_0$ is assigned to the input qubit $q_0$. The physical qubit $Q_1$ is assigned to the input qubit $q_1$. The physical qubit $Q_2$ is assigned to the input qubit $q_2$. The physical qubit $Q_5$ is assigned to the input qubit $q_3$. The physical qubit

$Q_3$ is assigned to the input qubit $q_4$. The physical qubit $Q_4$ is assigned to the input qubit $q_5$.

The executable quantum circuit 115b is an equivalent circuit of the dynamic quantum circuit 113 (see FIG. 14). In the executable quantum circuit 115b, the conditional branch circuit 113a in the dynamic quantum circuit 113 is converted into a conditional branch circuit 115b-1 that satisfies the hardware constraints.

In the converted conditional branch circuit 115b-1, six swap gates are added to a partial circuit 115b-2 that is executed when the branch condition is True. As a result of the addition of the first three swap gates in the partial circuit 115b-2, the assignment destination of the physical qubit $Q_0$ is changed from the input qubit $q_0$ to the input qubit $q_3$. The assignment destination of the physical qubit $Q_5$ is changed from the input qubit $q_3$ to the input qubit $q_5$. The assignment destination of the physical qubit $Q_3$ is changed from the input qubit $q_4$ to the input qubit $q_0$. The assignment destination of the physical qubit $Q_4$ is changed from the input qubit $q_5$ to the input qubit $q_4$.

Furthermore, as a result of the addition of the latter three swap gates in the partial circuit 115b-2, the assignment destinations of the respective physical qubits $Q_0$ to $Q_5$ are returned to the assignments indicated in the candidate assignment 114b.

No swap gates are added to a partial circuit 115b-3, which is executed when the branch condition is False.

While two swap gates are added to the executable quantum circuit 115a illustrated in FIG. 16, six swap gates are added to the executable quantum circuit 115b illustrated in FIG. 17. Therefore, if an executable quantum circuit with a smaller number of swap gates is simply selected, the executable quantum circuit 115a would be selected. However, the number of swap gates that are actually executed when the executable quantum circuits 115a and 115b are executed depends on the branch probabilities to the respective branch destinations in the conditional branch circuits 115a-1 and 115b-1. Thus, even if an executable quantum circuit with a smaller number of swap gates is selected, the number of quantum gates actually executed is not necessarily smaller when the circuit is executed.

Therefore, the classical computer 100 executes quantum computation using one of the executable quantum circuits in order to identify the branch probabilities. For example, the classical computer 100 sets initial values for the branch probabilities and executes quantum computation using the executable quantum circuit in which the number of swap gates to be executed is the smallest when the partial circuits are executed according to those branch probabilities.

For example, the classical computer 100 sets the initial values of the branch probabilities for the respective branch destinations in the conditional branch circuits 115a-1 and 115b-1 to "True: 50%" and "False: 50%". The classical computer 100 calculates the value of the objective function (the expected value of the number of swap gates to be executed) for all executable quantum circuits under such branch probabilities. The classical computer 100 then selects the executable quantum circuit having the smallest objective function value as the target for execution.

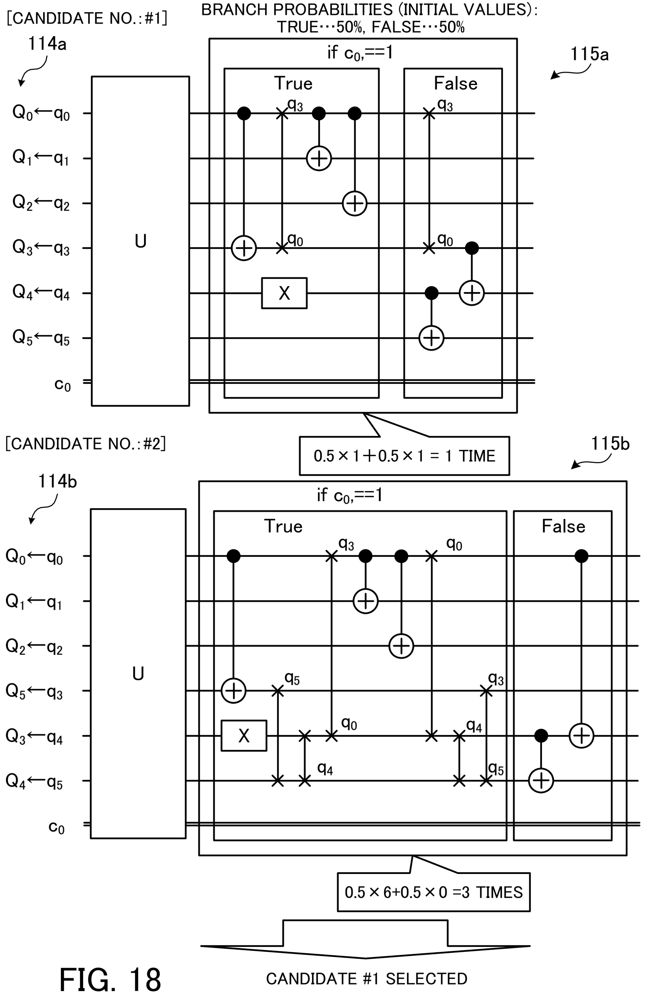

FIG. 18 illustrates a first example of selection of an executable quantum circuit according to branch probabilities. When the branch probabilities are "True: 50%" and "False: 50%", the value of the objective function of the executable quantum circuit 115a corresponding to the candidate assignment 114a with the candidate number "#1" is "1" ($0.5 \times 1 + 0.5 \times 1$). The value of the objective function of the executable quantum circuit 115b corresponding to the candidate assignment 114b with the candidate number "#2" is "3" ($0.5 \times 6 + 0.5 \times 0$).

Similarly, the values of the objective function are calculated for all other candidate assignments. The candidate assignment whose objective function value is the smallest is then selected. If the objective function values of the candidate assignments other than the candidate assignments 114a and 114b illustrated in FIG. 18 are greater than "1", the candidate assignment 114a with the candidate number "#1" is selected.

Then, quantum computation is executed a predetermined number of times in accordance with the executable quantum circuit 115a corresponding to the selected candidate assignment 114a.

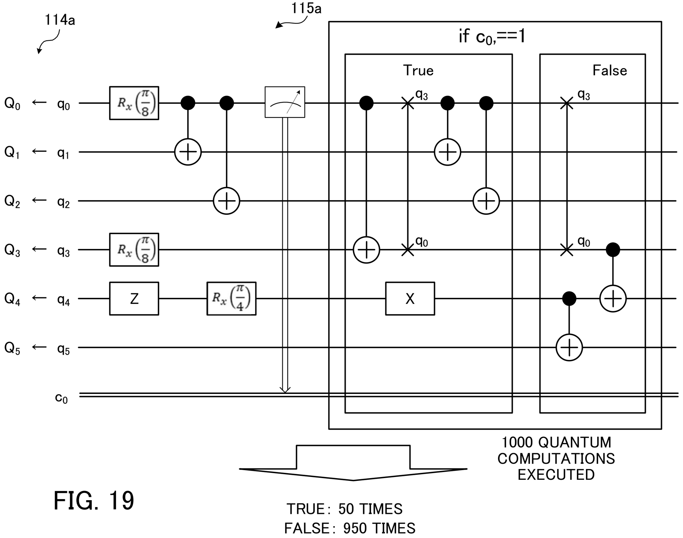

FIG. 19 illustrates an example of a result of executing the executable quantum circuit corresponding to the selected candidate assignment. In the example illustrated in FIG. 19, quantum computation based on the executable quantum circuit 115a is executed 1000 times, and the result of the conditional branch determination is "True: 50 times" and "False: 950 times".

Based on the result of the quantum computation of the executable quantum circuit 115a, the branch probabilities for the respective branch destinations of the conditional branch are calculated. As a result, the branch probabilities are calculated as "True: 5%" and "False: 95%".

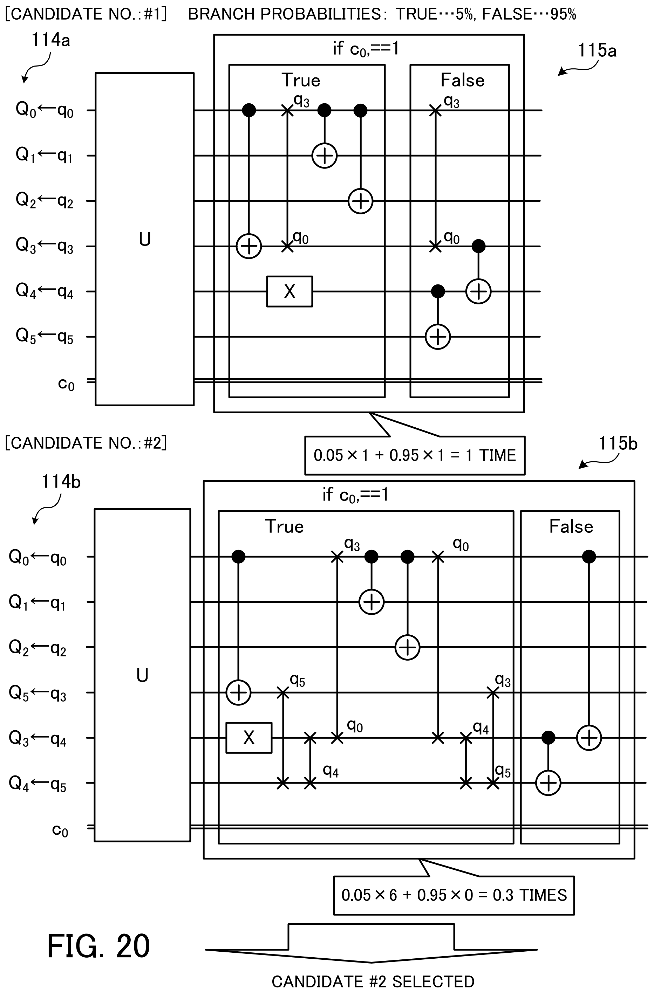

FIG. 20 illustrates a second example of selection of an executable quantum circuit according to branch probabilities. When the branch probabilities are "True: 5%" and "False: 95%", the value of the objective function of the executable quantum circuit 115a corresponding to the candidate assignment 114a with the candidate number "#1" is "1" ($0.05 \times 1 + 0.95 \times 1$). The value of the objective function of the executable quantum circuit 115b corresponding to the candidate assignment 114b with the candidate number "#2" is "0.3" ($0.05 \times 6 + 0.95 \times 0$).

Similarly, the values of the objective function are calculated for all other candidate assignments. The candidate assignment whose objective function value is the smallest is then selected. If the objective function values of the candidate assignments other than the candidate assignments 114a and 114b illustrated in FIG. 20 are greater than "0.3", the candidate assignment 114b with the candidate number "#2" is selected.

In this way, the value of the objective function (the expected value of the number of swap gates to be executed) is estimated, and the candidate assignment whose objective function value is the smallest is reselected. By repeatedly performing reselection of the candidate assignment and execution of the executable quantum circuit corresponding to the selected candidate assignment, an appropriate assignment is finally determined.

FIG. 21 is a flowchart illustrating an example of a processing procedure for assignment determination. The processing illustrated in FIG. 21 will be described below in accordance with the step numbers.

[Step S201] The dynamic parameter initial value determining unit 140 acquires the dynamic quantum circuit 113 from the storing unit 110.

[Step S202] The dynamic parameter initial value determining unit 140 sets initial values of dynamic parameters. For example, the dynamic parameter initial value determining unit 140 sets the branch probabilities for the respective branch destinations to be equal in the case of a conditional branch. The dynamic parameter initial value determining unit 140 also sets the number of loop iterations in loop processing to a predetermined value.

[Step S203] The candidate assignment selecting unit 150 sets the number of repetitions N for dynamic parameter updating. For example, the candidate assignment selecting unit 150 sets the number of repetitions N to a predetermined value.

[Step S204] The candidate assignment selecting unit 150 sets a value for the number of shots n. The number of shots refers to the number of times the executable quantum circuit is executed in order to obtain statistical values of the dynamic parameters. For example, the candidate assignment selecting unit 150 sets the number of shots n to a predetermined value.

[Step S205] The candidate assignment selecting unit 150 sets the value of a variable i to "0".

[Step S206] The candidate assignment selecting unit 150 acquires the candidate assignment set 114 and the objective function definition 112 from the storing unit 110. The number of candidate assignments included in the candidate assignment set 114 is denoted as M.

[Step S207] The candidate assignment selecting unit 150 calculates the value of the objective function (the expected value of the number of swap gates to be executed) for the M candidate assignments based on the dynamic parameters.

[Step S208] The candidate assignment selecting unit 150 sets $m$ as the candidate number of the candidate assignment whose objective function value is the smallest.

[Step S209] The candidate assignment selecting unit 150 determines whether the value of the variable i is smaller than the number of repetitions N (i < N?). If i is less than N, the candidate assignment selecting unit 150 advances the process to step S210. If i is equal to or greater than N, the candidate assignment selecting unit 150 advances the process to step S213.

[Step S210] The dynamic parameter acquiring unit 160 executes quantum computation n times in accordance with the executable quantum circuit corresponding to the candidate assignment with the candidate number m, in which the assignment of physical qubits is performed according to the candidate assignment m. For example, the dynamic parameter acquiring unit 160 transmits the executable quantum circuit to the quantum computer 200 and instructs the quantum computer 200 to execute quantum computation n times in accordance with the executable quantum circuit.

The quantum computer 200 executes quantum computation in accordance with the specified executable quantum circuit. During the execution, the quantum computer 200 stores in memory information indicating the execution paths of the respective quantum computations. The execution path information includes the branch destinations of the conditional branch and the number of loop iterations in the loop processing. The information indicating the branch destinations of the conditional branch may be measurement results that serve as branch conditions. Similarly, the information indicating the number of loop iterations may be a measurement result that serves as the condition for determining whether to continue the loop. The dynamic parameter acquiring unit 160 acquires the execution path information from the quantum computer 200.

[Step S211] The dynamic parameter acquiring unit 160 statistically processes the execution paths of the n quantum computations and calculates the values of the dynamic parameters. For example, the dynamic parameter acquiring unit 160 calculates the branch probability of "True" by dividing the number of times the judgment result of the conditional branch is "True" by n. Similarly, the dynamic parameter acquiring unit 160 calculates the branch probability of "False" by dividing the number of times the judgment result of the conditional branch is "False" by n. Regarding the loop processing, for example, the dynamic parameter acquiring unit 160 calculates the average number of loop iterations for each quantum computation and uses it as the value of the dynamic parameter related to the number of loop iterations.

[Step S212] The dynamic parameter acquiring unit 160 increments the variable i by 1 (i = i + 1) and proceeds to step S207.

[Step S213] The candidate assignment selecting unit 150 outputs executable quantum circuit information based on the candidate assignment m. For example, the candidate assignment selecting unit 150 transmits the executable quantum circuit information to the computation controlling unit 170. The executable quantum circuit information includes the assignment of qubits indicated by the candidate assignment m and the dynamic quantum circuit executable under the corresponding assignment.

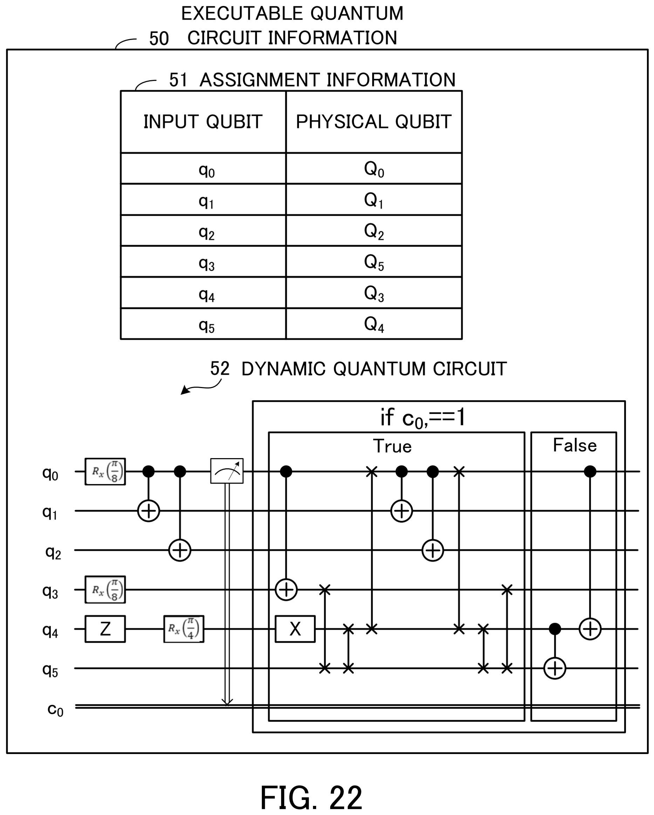

FIG. 22 illustrates an example of executable quantum circuit information. Executable quantum circuit information 50 includes assignment information 51 and a dynamic quantum circuit 52. The assignment information 51 indicates the same qubit assignment relationship as that of the candidate assignment m whose objective function value is the smallest according to the last updated values of the dynamic parameters. The dynamic quantum circuit 52 is the same quantum circuit as the executable quantum circuit whose objective function value is the smallest according to the last updated values of the dynamic parameters.

The computation controlling unit 170 executes quantum computation using the quantum computer 200 based on the executable quantum circuit information 50. For example, the computation controlling unit 170 instructs the quantum computer 200 to execute quantum computation in accordance with the dynamic quantum circuit 52. At that time, the computation controlling unit 170 instructs the quantum computer 200 to map the physical qubits indicated in the assignment information 51 onto the input qubits in the dynamic quantum circuit 52. The quantum computation is then executed by the quantum computer 200, and a computation result is returned to the computation controlling unit 170.

The computation result is transmitted to the terminal device that transmitted the computation request via the computation request receiving unit 120.

By determining the assignment of qubits in this way, the number of executions on the actual machine is reduced to N/|M| times compared with a method in which all executable quantum circuits are executed and the best one is selected. Moreover, since the dynamic parameters are updated N times, the estimated value of the objective function is calculated more accurately by reducing the influence of noise. The assignment determination performed according to the procedure illustrated in FIG. 21 becomes more efficient as the number M of candidate assignments increases.

Although the dynamic quantum circuit 113 illustrated in FIG. 14 does not include loop processing, even when loop processing is included, it is similarly possible to achieve an assignment that minimizes the fidelity.

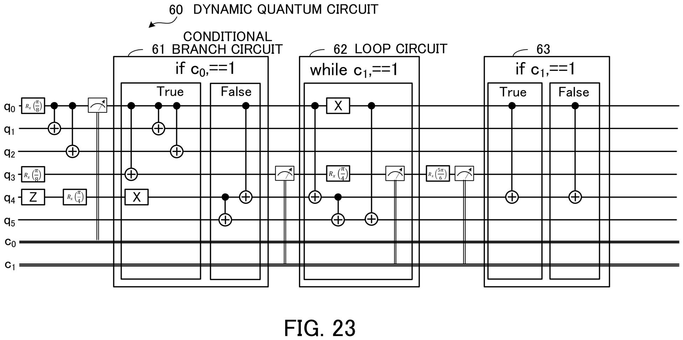

FIG. 23 illustrates an example of a dynamic quantum circuit including loop processing. A dynamic quantum circuit 60 includes a conditional branch circuit 61, a loop circuit 62, and a conditional branch circuit 63. The number of input qubits operated in the dynamic quantum circuit 60 is six. Here, it is assumed that the qubit assignment is performed according to the candidate assignment 114a illustrated in FIG. 15.

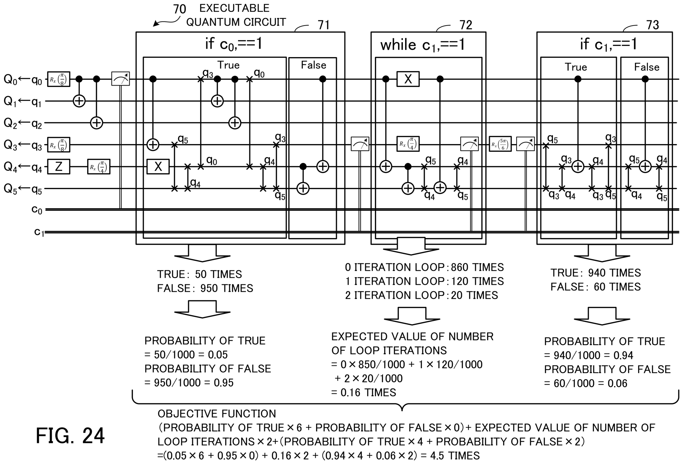

FIG. 24 illustrates an example of a value of the objective function obtained by executing an executable quantum circuit including loop processing. In a first conditional branch circuit 71, six swap gates are added to the partial circuit that is executed when the branch condition is "True". Two swap gates are added to a loop circuit 72. In a second conditional branch circuit 73, four swap gates are added to the partial circuit that is executed when the branch condition is "True", and two swap gates are added to the partial circuit that is executed when the branch condition is "False".

When quantum computation is executed 1000 times in accordance with the executable quantum circuit 70, the judgment result of the first conditional branch circuit 71 is "True" 50 times and "False" 950 times. In the loop circuit 72, the number of loop iterations is 0 for 860 executions, 1 for 120 executions, and 2 for 20 executions. In the second conditional branch circuit 73, the judgment result is "True" 940 times and "False" 60 times.

In this case, the branch probability of "True" for the first conditional branch circuit 71 is "0.05", and the branch probability of "False" is "0.95". The expected value of the number of loop iterations per quantum computation for the loop circuit 72 is "0.16" ($0 \times 850/1000 + 1 \times 120/1000 + 2 \times 20/1000 = 0.16$). The branch probability of "True" for the second conditional branch circuit 73 is "0.94", and the branch probability of "False" is "0.06". The value of the objective function is as follows:

(Probability of True $\times$ 6 + Probability of False $\times$ 0) + Expected value of number of loop iterations $\times$ 2 + (Probability of True $\times$ 4 + Probability of False $\times$ 2) = ($0.05 \times 6 + 0.95 \times 0$) + $0.16 \times 2$ + ($0.94 \times 4 + 0.06 \times 2$) = 4.5 times

That is, the expected value of the number of swap gates to be executed when the executable quantum circuit 70 is executed is 4.5.

An executable quantum circuit that satisfies the hardware constraints represented by the topology is generated, for example, by the following procedure.

The circuit converting unit 130 first generates as many candidate assignments as possible for a given dynamic quantum circuit c without considering the topology (full search). For example, the circuit converting unit 130 sets the entire set of the dynamic quantum circuit as c. The circuit converting unit 130 defines a function "$f: N_{max} \times c \rightarrow 2^c$" that enumerates all quantum circuits generated by inserting no more than $N_{max}$ swap gates into the given dynamic quantum circuit.

The circuit converting unit 130 calculates $P = f(N_1, c)$ for a sufficiently large integer $N_1$. The circuit converting unit 130 then creates a set P' by enumerating all initial assignments for each element of P. Thereafter, the circuit converting unit 130 removes elements from P' that do not match the topology of the actual machine.

[Other Embodiments]

In the quantum computation system 300 of the second embodiment, the quantum computation for acquiring dynamic parameters and the quantum computation for obtaining the computation result of the input dynamic quantum circuit are separated. However, the dynamic parameters may also be acquired during the quantum computation for obtaining the computation result. In this case, the classical computer 100 acquires the execution path during the quantum computation for obtaining the computation result of the dynamic quantum circuit, updates the dynamic parameters, and changes the dynamic quantum circuit used for subsequent quantum computation.

For example, the classical computer 100 not only selects the executable quantum circuit initially but also reselects the assignment based on statistical data obtained during the execution of multiple quantum computations (for example, up to the 3000th computation out of 10,000 computations). The classical computer 100 then instructs the quantum computer 200 to execute the quantum computation from the 3001st computation onward using the dynamic quantum circuit corresponding to the reselected assignment.

In the second embodiment, the optimal executable quantum circuit is selected among the assignments for the single quantum computer 200, but optimal assignments for multiple quantum computers may also be determined in a similar manner. For example, when the number of input qubits in the input dynamic quantum circuit is large, quantum computation may be performed using multiple quantum computers. In such a case, the classical computer 100 is able to appropriately determine the assignment of physical qubits for each of the multiple quantum computers based on the hardware constraints of each quantum computer.

The above description is merely illustrative of the principles of the embodiments. Numerous modifications and variations may be apparent to those skilled in the art, and the embodiments are not limited to the precise configurations and applications described above. All such modifications and equivalents are considered to fall within the scope of the embodiments as defined by the appended claims and their equivalents.

Reference Signs List

| | |
|---|---|
| 1 | first dynamic quantum circuit |
| 1a | measurement point |
| 2 | constraint condition |
| 3a, 3b, | and so on candidate assignment |
| 4a, 4b, | and so on second dynamic quantum circuit |
| 10 | information processing apparatus |
| 11 | storing unit |
| 12 | processing unit |

**Claims**

1.  A quantum computation support program that causes a computer to execute a process comprising:

    generating, based on a first dynamic quantum circuit in which a gate operation to be executed varies in accordance with a measurement result of a quantum state at a predetermined measurement point for a qubit, a plurality of candidate assignments indicating candidates of a plurality of second qubits in a quantum computer to be assigned to a plurality of first qubits indicated in the first dynamic quantum circuit;
    generating, based on each of the plurality of candidate assignments, respective second dynamic quantum circuits that are capable of performing a gate operation equivalent to the gate operation of the first dynamic quantum circuit while satisfying a gate-operation-related constraint condition in the quantum computer;
    acquiring measurement results at the predetermined measurement point in a plurality of quantum computations executed in accordance with the respective second dynamic quantum circuits corresponding to a part of the plurality of candidate assignments;
    calculating, based on the measurement results, an index value affecting fidelity when the plurality of quantum computations is executed in accordance with the respective second dynamic quantum circuits corresponding to the plurality of candidate assignments; and
    determining, based on the index value of each of the plurality of candidate assignments, an assignment of the plurality of second qubits to the plurality of first qubits.

2.  The quantum computation support program according to claim 1, wherein:

the first dynamic quantum circuit includes a conditional branch circuit that executes one of a first partial circuit and a second partial circuit in accordance with the measurement result at the predetermined measurement point, the generating of the respective second dynamic quantum circuits includes generating the respective second dynamic quantum circuits satisfying the gate-operation-related constraint condition by adding a swap gate to at least one of the first partial circuit and the second partial circuit, and the calculating of the index value includes calculating, as the index value, an expected value of a number of executions of the swap gate when the plurality of quantum computations is executed in accordance with the respective second dynamic quantum circuits corresponding to the plurality of candidate assignments.

3. The quantum computation support program according to claim 2, wherein:
the calculating of the index value includes calculating the expected value based on a number of times the first partial circuit is executed and a number of times the second partial circuit is executed, based on the measurement results at the predetermined measurement point obtained in the plurality of quantum computations executed in accordance with the first dynamic quantum circuit.

4. The quantum computation support program according to claim 1, wherein:

the first dynamic quantum circuit includes a loop circuit that includes the predetermined measurement point and is repeatedly executed based on the measurement result at the predetermined measurement point, the generating of the respective second dynamic quantum circuits includes generating the respective second dynamic quantum circuits that satisfy the gate-operation-related constraint condition by adding a swap gate to the loop circuit, and the calculating of the index value includes calculating, as the index value, an expected value of a number of executions of the swap gate based on an average number of repetitions of the loop circuit when the plurality of quantum computations is executed in accordance with the respective second dynamic quantum circuits.

5. The quantum computation support program according to claim 1, wherein:

the acquiring of the measurement results and the calculating of the index value are alternately repeated N times (N being a natural number), the acquiring of the measurement results includes, after a second time, determining a first candidate assignment based on the index value of each of the plurality of candidate assignments calculated immediately before, and acquiring the measurement results at the predetermined measurement point in a plurality of quantum computations executed in accordance with one of the respective second dynamic quantum circuits corresponding to the first candidate assignment, and the determining of the assignment of the plurality of second qubits includes determining the assignment of the plurality of second qubits to the plurality of first qubits based on the index value of each of the plurality of candidate assignments calculated in an N-th calculating of the index value.

6. The quantum computation support program according to claim 1, wherein:
the determining of the assignment of the plurality of second qubits includes determining the assignment of the plurality of second qubits to the plurality of first qubits based on a second candidate assignment from among the plurality of candidate assignments, the second candidate assignment having the index value indicating that the fidelity is higher than the fidelity indicated by the index value of each of the plurality of candidate assignments other than the second candidate assignment.

7. The quantum computation support program according to any of claims 1 to 6, wherein:
the process further includes outputting, as a computation result of the first dynamic quantum circuit, a result of the plurality of quantum computations executed by the quantum computer in accordance with one of the respective second dynamic quantum circuits corresponding to the determined assignment.

8. A quantum computation support method executed by a computer, the quantum computation support method comprising:

generating, based on a first dynamic quantum circuit in which a gate operation to be executed varies in accordance with a measurement result of a quantum state at a predetermined measurement point for a qubit, a plurality of candidate assignments indicating candidates of a plurality of second qubits in a quantum computer to be assigned to a plurality of first qubits indicated in the first dynamic quantum circuit;

generating, based on each of the plurality of candidate assignments, respective second dynamic quantum circuits that are capable of performing a gate operation equivalent to the gate operation of the first dynamic quantum circuit while satisfying a gate-operation-related constraint condition in the quantum computer;

acquiring measurement results at the predetermined measurement point in a plurality of quantum computations executed in accordance with the respective second dynamic quantum circuits corresponding to a part of the plurality of candidate assignments;

calculating, based on the measurement results, an index value affecting fidelity when the plurality of quantum computations is executed in accordance with the respective second dynamic quantum circuits corresponding to the plurality of candidate assignments; and

determining, based on the index value of each of the plurality of candidate assignments, an assignment of the plurality of second qubits to the plurality of first qubits.

9. An information processing apparatus comprising:
   a processing unit for:

   generating, based on a first dynamic quantum circuit in which a gate operation to be executed varies in accordance with a measurement result of a quantum state at a predetermined measurement point for a qubit, a plurality of candidate assignments indicating candidates of a plurality of second qubits in a quantum computer to be assigned to a plurality of first qubits indicated in the first dynamic quantum circuit,

   generating, based on each of the plurality of candidate assignments, respective second dynamic quantum circuits that are capable of performing a gate operation equivalent to the gate operation of the first dynamic quantum circuit while satisfying a gate-operation-related constraint condition in the quantum computer,

   acquiring measurement results at the predetermined measurement point in a plurality of quantum computations executed in accordance with the respective second dynamic quantum circuits corresponding to a part of the plurality of candidate assignments,

   calculating, based on the measurement results, an index value affecting fidelity when the plurality of quantum computations is executed in accordance with the respective second dynamic quantum circuits corresponding to the plurality of candidate assignments, and

   determining, based on the index value of each of the plurality of candidate assignments, an assignment of the plurality of second qubits to the plurality of first qubits.

INFORMATION PROCESSING APPARATUS

10 — 11 STORING UNIT

FIRST DYNAMIC QUANTUM CIRCUIT

1 — 2 CONSTRAINT CONDITION

12 PROCESSING UNIT

GENERATION OF ASSIGNMENT CANDIDATES

3a ASSIGNMENT CANDIDATE

| CANDIDATE NO.:#1 | |
|---|---|
| FIRST QUBIT | SECOND QUBIT |
| $q_0$ | $Q_0$ |
| $q_1$ | $Q_1$ |
| ... | ... |

3b ASSIGNMENT CANDIDATE

| CANDIDATE NO.:#2 | |
|---|---|
| FIRST QUBIT | SECOND QUBIT |
| $q_0$ | $Q_0$ |
| $q_1$ | $Q_2$ |
| ... | ... |

GENERATION OF SECOND DYNAMIC QUANTUM CIRCUIT

4a SECOND DYNAMIC QUANTUM CIRCUIT

4b SECOND DYNAMIC QUANTUM CIRCUIT

ACQUISITION OF MEASUREMENT RESULTS DURING EXECUTION OF PART OF SECOND DYNAMIC QUANTUM CIRCUITS

BRANCH PROBABILITIES: True···5%, False···95%

CALCULATION OF INDEX VALUE (EXPECTED VALUE OF NUMBER OF SWAP GATES TO BE EXECUTED)

| CANDIDATE NO. | EXPECTED VALUE OF NUMBER OF SWAP GATES TO BE EXECUTED |
|---|---|
| #1 | $0.05 \times 1 + 0.95 \times 1 = 1$ TIME |
| #2 | $0.05 \times 6 + 0.95 \times 0 = 0.3$ TIMES |
| ... | ... |

MINIMUM

ASSIGNMENT DETERMINATION

ASSIGNMENT WITH CANDIDATE NO. #2

FIG. 1

FIG. 2

FIG. 3

$$|\psi\rangle = \alpha|0\rangle + \beta|1\rangle = \begin{bmatrix} \alpha \\ \beta \end{bmatrix}$$

PROBABILITY $|\alpha|^2$    PROBABILITY $|\beta|^2$

PROBABILITY AMPLITUDE FOR 00 ···
PROBABILITY AMPLITUDE FOR 01 ···
PROBABILITY AMPLITUDE FOR 10 ···
PROBABILITY AMPLITUDE FOR 11 ···

$$\begin{bmatrix} 1 \\ 0 \\ 0 \\ 0 \end{bmatrix} \rightarrow \begin{bmatrix} 1/\sqrt{2} \\ 1/\sqrt{2} \\ 0 \\ 0 \end{bmatrix} \rightarrow \begin{bmatrix} 1/\sqrt{2} \\ 0 \\ 0 \\ 1/\sqrt{2} \end{bmatrix} \rightarrow \begin{bmatrix} 0.5 \\ 1/\sqrt{8} + i/\sqrt{8} \\ 0.5 \\ 1/\sqrt{8} - i/\sqrt{8} \end{bmatrix}$$

FIG. 4

FIG. 5

FIG. 6

40

41 EQUIVALENT CIRCUIT

CCX GATE

FIG. 7

[HARDWARE
CONSTRAINTS]

42

$Q_0$ ⟸ $Q_1$ ⟹ $Q_2$

⟹ : DIRECTION OF CNOT

QUBIT
ASSIGNMENT

43

[QUANTUM
CIRCUIT]

$q_0$

$q_1$

$q_2$

$q_0 \rightarrow Q_1$
$q_1 \rightarrow Q_0$
$q_2 \rightarrow Q_2$

FIG. 8

FIG. 9

401

100

CLASSICAL COMPUTER

130
CIRCUIT CONVERTING UNIT

120
COMPUTATION REQUEST RECEIVING UNIT

110 STORING UNIT

111
TOPOLOGY INFORMATION

112
OBJECTIVE FUNCTION DEFINITION

113
DYNAMIC QUANTUM CIRCUIT

114
CANDIDATE ASSIGNMENT SET

115
EXECUTABLE QUANTUM CIRCUIT SET

140
DYNAMIC PARAMETER INITIAL VALUE DETERMINING UNIT

150
CANDIDATE ASSIGNMENT SELECTING UNIT

160
DYNAMIC PARAMETER ACQUIRING UNIT

170
COMPUTATION CONTROLLING UNIT

200
QUANTUM COMPUTER

FIG. 10

111  TOPOLOGY INFORMATION

FIG. 11

112  OBJECTIVE FUNCTION DEFINITION

OBJECTIVE FUNCTION VALUE = SUM OF EXPECTED VALUES OF NUMBER OF SWAP GATES TO BE EXECUTED IN RESPECTIVE DYNAMIC PARTIAL CIRCUITS

| DYNAMIC PARTIAL CIRCUIT TYPE | METHOD FOR CALCULATING EXPECTED VALUE OF NUMBER OF SWAP GATES TO BE EXECUTED |
|---|---|
| CONDITIONAL BRANCH | (PROBABILITY OF TRUE BRANCH) × (NUMBER OF SWAP GATES AT TRUE BRANCH DESTINATION) + (PROBABILITY OF FALSE BRANCH) × (NUMBER OF SWAP GATES AT FALSE BRANCH DESTINATION) |
| LOOP | (EXPECTED NUMBER OF LOOP ITERATIONS) × (NUMBER OF SWAP GATES IN LOOP) |

FIG. 12

START

ACQUIRE QUANTUM
COMPUTATION REQUEST    S101

GENERATE CANDIDATE
ASSIGNMENT SET    S102

ASSIGNMENT DETERMINATION    S103

EXECUTE COMPUTATION
IN ACCORDANCE WITH
QUANTUM CIRCUIT    S104

TRANSMIT COMPUTATION RESULT    S105

END

FIG. 13

FIG. 14

114 CANDIDATE ASSIGNMENT SET

CANDIDATE ASSIGNMENTS

114a    114b

| CANDIDATE NO.: #1 | |
|---|---|
| INPUT QUBITS | PHYSICAL QUBITS |
| $q_0$ | $Q_0$ |
| $q_1$ | $Q_1$ |
| $q_2$ | $Q_2$ |
| $q_3$ | $Q_3$ |
| $q_4$ | $Q_4$ |
| $q_5$ | $Q_5$ |

FIG. 15

FIG. 16

FIG. 17

FIG. 18

CANDIDATE #1 SELECTED

FIG. 19

[CANDIDATE NO.:#1] BRANCH PROBABILITIES: TRUE⋯5%, FALSE⋯95%

$0.05 \times 1 + 0.95 \times 1 = 1$ TIME

[CANDIDATE NO.:#2]

$0.05 \times 6 + 0.95 \times 0 = 0.3$ TIMES

FIG. 20

CANDIDATE #2 SELECTED

START OF ASSIGNMENT
DETERMINATION

S201
ACQUIRE DYNAMIC QUANTUM
CIRCUIT

S202
SET INITIAL VALUES OF
DYNAMIC PARAMETERS

S203
SET NUMBER OF REPETITIONS N

S204
SET NUMBER OF SHOTS n

S205
$i = 0$

S206
ACQUIRE CANDIDATE ASSIGNMENT
SET AND OBJECTIVE FUNCTION
DEFINITION

S207
CALCULATE OBJECTIVE FUNCTION
VALUE

S208
$m :=$ CANDIDATE ASSIGNMENT WITH
SMALLEST EXPECTED VALUE OF
OBJECTIVE FUNCTION

S209
$i < N$?

NO

YES

S210
EXECUTE QUANTUM COMPUTATION
n TIMES USING ASSIGNMENT m

S211
CALCULATE VALUES OF DYNAMIC
PARAMETERS

S212
$i := i + 1$

S213
OUTPUT ASSIGNMENT m AND
CORRESPONDING EXECUTABLE
QUANTUM CIRCUIT

END

FIG. 21

40

EXECUTABLE QUANTUM
50 CIRCUIT INFORMATION

51 ASSIGNMENT INFORMATION

| INPUT QUBIT | PHYSICAL QUBIT |
|---|---|
| $q_0$ | $Q_0$ |
| $q_1$ | $Q_1$ |
| $q_2$ | $Q_2$ |
| $q_3$ | $Q_5$ |
| $q_4$ | $Q_3$ |
| $q_5$ | $Q_4$ |

52 DYNAMIC QUANTUM CIRCUIT

FIG. 22

FIG. 23

FIG. 24

EP 4 742 115 A1

## INTERNATIONAL SEARCH REPORT

| International application No. |
|---|
| **PCT/JP2023/024672** |

**A.    CLASSIFICATION OF SUBJECT MATTER**

*G06N 10/70*(2022.01)i
FI:    G06N10/70

According to International Patent Classification (IPC) or to both national classification and IPC

**B.    FIELDS SEARCHED**

Minimum documentation searched (classification system followed by classification symbols)

G06N10/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2019-517069 A (GOOGLE LLC) 20 June 2019 (2019-06-20)<br>paragraphs [0026]-[0091], fig. 2 | 1-9 |
| A | JP 2022-516840 A (INTERNATIONAL BUSINESS MACHINES CORPORATION) 03 March 2022 (2022-03-03)<br>paragraphs [0022]-[0151], fig. 1-3 | 1-9 |
| A | US 2023/0095725 A1 (BEIJING BAIDU NETCOM SCIENCE TECHNOLOGY CO., LTD.) 30 March 2023 (2023-03-30)<br>paragraphs [0021]-[0134] | 1-9 |
| A | JP 2022-3576 A (BEIJING BAIDU NETCOM SCIENCE TECHNOLOGY CO., LTD.) 11 January 2022 (2022-01-11)<br>paragraphs [0014]-[0150], fig. 3-5 | 1-9 |
| A | JP 2022-94330 A (INTERNATIONAL BUSINESS MACHINES CORPORATION) 24 June 2022 (2022-06-24)<br>paragraphs [0013]-[0114] | 1-9 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 September 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

44

**INTERNATIONAL SEARCH REPORT**
Information on patent family members

International application No.

**PCT/JP2023/024672**

| Patent document cited in search report | | | Publication date (day/month/year) | Patent family member(s) | | | Publication date (day/month/year) |
|---|---|---|---|---|---|---|---|
| JP | 2019-517069 | A | 20 June 2019 | US | 2019/0156239 | A1 | |
| | | | | paragraphs [0030]-[0097], fig. 2 | | | |
| | | | | WO | 2017/200536 | A1 | |
| | | | | CN | 109643398 | A | |
| JP | 2022-516840 | A | 03 March 2022 | US | 2020/0218842 | A1 | |
| | | | | paragraphs [0026]-[0153], fig. 1-3 | | | |
| | | | | WO | 2020/141079 | A1 | |
| | | | | CN | 113261017 | A | |
| US | 2023/0095725 | A1 | 30 March 2023 | CN | 114139712 | A | |
| JP | 2022-3576 | A | 11 January 2022 | US | 2022/0076154 | A1 | |
| | | | | paragraphs [0037]-[0181], fig. 3-5 | | | |
| | | | | CN | 112819170 | A | |
| JP | 2022-94330 | A | 24 June 2022 | US | 2022/0188680 | A1 | |
| | | | | paragraphs [0013]-[0114] | | | |
| | | | | CN | 114626535 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022167926 A
- JP 2022521143 A
- US 20220383180
- US 20210374589